# EUROPEAN PATENT APPLICATION

(11) **EP 4 394 472 A1**
(43) Date of publication of application: **03.07.2024**
(21) Application number: 23220779.5
(22) Date of filing: 29.12.2023
(51) Int. Cl.: G02B 6/44, G02B 6/38

(54) **HIGH DENSITY BREAKOUT PANELS WITH FRONT ACCESS**

(30) Priority: 30.12.2022 US 202263477867 P; 22.12.2023 US 202318394551
(71) Applicant: Google LLC, Mountain View, CA 94043 (US)
(72) Inventor: POE, Charles, Mountain View, 94043 (US); BERG, Mathew, Mountain View, 94043 (US); ROSELLE, John David, Mountain View, 94043 (US)
(74) Representative: Betten & Resch

(57) **Abstract**

A fiber optic cable management system includes a patch panel assembly that further includes multiple fiber optic trays with one or more fiber optic module assemblies coupled to each tray. The fiber optic module assemblies may include two different types of adapter modules. In one example, a first type is a lucent connector ("LC") adapter module, and the second type is a multi-fiber push-on ("MPO") adapter module. The MPO adapter module and the LC adapter module are arranged adjacent one another. The LC adapter modules may further include a plurality of adapter ports and the MPO adapter module may include a single adapter port. The arrangement of the LC adapter module and MPO adapter module allows for connection with a breakout cable assembly with an MPO connector and a plurality of LC connectors. In some examples, the LC adapter module may be a dual polarity adapter module.

## Description

### CROSS-REFERENCE TO RELATED APPLICATIONS

The present application claims the benefit of the filing date of U.S. Provisional Patent Application No. 63/477,867 filed December 30, 2022, the disclosure of which is hereby incorporated herein by reference.

### BACKGROUND

The capabilities of fiber optic connectors, fiber optic cable, and fiber optic hardware and systems have been continuously advanced to meet the demands of increasing numbers of users and high transmission rate requirements. Fiber optic hardware is increasingly being used for a variety of applications, such as data transmission, video, broadband voice, and the like. The fiber optic cable, connectors, or electrical cables are connected to a fiber optic module mounted in a panel assembly disposed in a cable management rack located in a data distribution center or a server room. The fiber optic module provides cable-to-cable fiber optic connections and manages the polarity of fiber optic cable connections.

Due to the increasing demand of bandwidth, a higher density connection with an increased number of fiber optic components and connectors in the fiber optic module is desired within a given space in the panel assembly. However, such higher density connection often makes it difficult to access the fiber optic components and connectors in the fiber optic modules in a closely packed arrangement. Furthermore, the proper organization of the cable connections in the panel assembly in the cable management rack also becomes a difficult task.

### BRIEF SUMMARY

According to an aspect of the disclosure, a fiber optic cable management system includes a patch panel assembly with multiple fiber optic trays and one or more fiber optic module assemblies coupled to each tray. The fiber optic module assemblies may include two different types of adapter modules. In one example, a first type is a lucent connector ("LC") adapter module and the second type is a multi-fiber push-on ("MPO") adapter module. The MPO adapter module and the LC adapter module are arranged side-by-side and adjacent or laterally adjacent one another. The LC adapter modules may further include a plurality of adapter ports and the MPO adapter module may include a single adapter port, in which the arrangement of the LC adapter modules and MPO adapter module allow for connection with a breakout cable assembly that has an MPO connector and a plurality of LC connectors. Optionally, the LC adapter modules may be dual polarity adapter modules that are configured to receive a dual polarity fiber optic cable. This arrangement allows for a high-density patch panel, ease and quick access to the fiber optic equipment on the tray, and a small footprint for desired cable and connector management and organization.

According to an aspect of the disclosure, a patch panel assembly includes an outer housing, a fiber optic equipment tray, and at least one fiber optic module assembly. The outer housing may have a main body and an interior chamber. The fiber optic equipment tray may be movable relative to the main body and the tray may have a support surface. At least one fiber optic module assembly may be coupled to the support surface. The at least one fiber optic module assembly may further include a first plurality of fiber optic adapter ports configured to receive corresponding first connectors of a cable assembly. A second fiber optic adapter port may be configured to receive a second connector of the cable assembly. The second fiber optic adapter port may be positioned adjacent or laterally adjacent the first plurality of adapter ports and may be different than the first plurality of fiber optic adapter ports. The first plurality of fiber optic adapter parts and the second fiber optic adapter port may be aligned with one another along a single plane.

According to another aspect of the disclosure, a fiber optic cable system for a fiber optic patch panel assembly may include an outer housing, a first fiber optic equipment tray, a second fiber optic equipment tray, a first module assembly, a second module assembly, a first cable assembly, and a second cable assembly. The outer housing may have a main body and an interior chamber. The first fiber optic equipment tray may be movable relative to the main body and have a first support surface. The second fiber optic equipment tray may be movable relative to the main body and have a second support surface. The first module assembly may be coupled to the first fiber optic equipment tray. The first cable assembly may be coupled to the first module assembly and have a first plurality of connectors at one end of the first cable assembly and a second connector at the opposite end of the first cable assembly. The first plurality of connectors and the second connector may be the same or different. The second module assembly may be coupled to the second fiber optic equipment tray. The second cable assembly may be coupled to the second module assembly and have a third plurality of connectors at one end and a fourth connector at the opposite end of the second cable assembly. The third plurality of connectors and the fourth connector may be the same or different. The first module assembly may further include a first plurality of fiber optic adapter ports configured to receive corresponding first connectors of the first cable assembly. A second fiber optic adapter port may be configured to receive the second connector of the first cable assembly. The second fiber optic adapter port may abut the first plurality of fiber optic adapter ports. The first plurality of fiber optic adapter ports and the second fiber optic adapter port may extend along a same plane as the first support surface. The second module assembly may further include a third plurality of fiber optic adapter ports configured to receive corresponding third connectors of the second cable assembly and a fourth fiber optic adapter port configured to receive the fourth connector of the second cable assembly. The fourth fiber optic adapter port may abut the third plurality of fiber optic adapter ports. The third plurality of fiber optic ports and the fourth fiber optic adapter port may extend along a same plane as the second support surface. The first module assembly and the second module assembly may be vertically aligned with one another.

According to another aspect of the disclosure, a patch panel assembly may include a plurality of fiber optic equipment trays, a plurality of lucent connector ("LC") adapter ports, and a plurality of multi-fiber push-on ("MPO") adapter ports. Each of the plurality of fiber optic equipment trays may be movable relative to one another. Each of the plurality of fiber optic equipment trays may be coupled with some of the plurality of the LC adapter parts. At least one MPO adapter part of the plurality of MPO adapter ports may be coupled to each tray and positioned directly adjacent the some of the plurality of LC ports coupled to each of the plurality of fiber optic equipment trays. Some of the LC adapter ports and the at least one MPO adapter port on each tray may be positioned in a single row across a width of the tray. The LC adapter ports may be dual polarity ports.

### BRIEF DESCRIPTION OF THE DRAWINGS

A more complete appreciation of the subject matter of the present technology and non-exhaustive description of the various advantages thereof may be realized by reference to the following detailed description which refers to the accompanying drawings briefly described below.
FIGURE 1A depicts an example schematic fiber optic cable management system, including a fiber optic panel assembly according to aspects of the disclosure.
FIGURE 1B depicts the example schematic fiber optic panel assembly of FIGURE 1A in an open position with a tray pulled forward according to aspects of the disclosure.
FIGURE 2 depicts an example tray with fiber optic components positioned on the tray, including multiple fiber optic module assemblies, according to aspects of the disclosure.
FIGURE 3A is a front view of an example module according to aspects of the disclosure.
FIGURE 3B is a schematic rear view of the example module in FIGURE 3A according to aspects of the disclosure.
FIGURE 4A is a front view of another example module according to aspects of the disclosure.
FIGURE 4B is a schematic rear view of the example module in FIGURE 4A.
FIGURE 5 is an example module assembly with an attached example cable assembly according to aspects of the disclosure.
FIGURE 6A is an example schematic cable assembly according to aspects of the disclosure.
FIGURE 6B is another example cable assembly according to aspects of the disclosure.
FIGURE 7 is an enlarged perspective view of the portion of the tray of FIGURE 2.
FIGURE 8A is a front view of the ports of the fiber optic panel assembly according to aspects of the disclosure.
FIGURE 8B is an example port map that identifies the port configuration and layout of the fiber optic panel assembly shown in FIGURE 8A, according to aspects of the disclosure.
FIGURE 9A is an example arrangement of incoming fiber optic wires into the example patch panel assembly, according to aspects of the disclosure.
FIGURE 9B is another example module according to aspects of the disclosure.
FIGURE 9C is a simplified schematic front and top perspective view of the module of FIGURE 9B.
FIGURE 9D is a schematic rear view of the module of FIGURE 9B.
FIGURES 9E-9G are views of an example cable connector according to aspects of the disclosure.
FIGURE 9H is a view of an example dual polarity connector mating with an example module.
FIGURE 9I is an enlarged view of dual polarity connectors positioned within an example module.
FIGURE 10A depicts an example fiber optic panel assembly according to aspects of the disclosure.
FIGURE 10B depicts the example fiber optic panel assembly of FIGURE 10A in an open position with a tray pulled forward according to aspects of the disclosure.
FIGURE 10C depicts an enlarged area of FIGURE 10B.
FIGURE 10D is a front view of the adapter ports of the fiber optic panel assembly of FIGURE 10A.
FIGURE 11A depicts an example fiber optic panel assembly according to aspects of the disclosure.
FIGURE 11B depicts the example fiber optic panel assembly of FIGURE 11A in an open position with a tray pulled forward according to aspects of the disclosure.
FIGURE 11C is a front view of the adapter ports of the fiber optic panel assembly of FIGURE 11A according to aspects of the disclosure.

### DETAILED DESCRIPTION

Improved fiber optic cable management systems that include a fiber optic patch panel assembly for fiber optic interconnection are disclosed. A fiber optic patch panel assembly includes a plurality of equipment trays that are movable relative to one another, as well as the housing of the panel assembly. A plurality of fiber optic module assemblies may be coupled to each tray. The fiber optic module assemblies may be arranged side-by-side along the width or length of each tray. A front side of the fiber optic module assembly is configured to receive incoming fiber optic cable connectors and the rear side of the fiber optic module assembly couples with connectors of outgoing fiber optic cables. The fiber optic module assemblies provide cable-to-cable fiber optic connections, and connectors of the incoming fiber optic cables will further couple with connectors of the outgoing fiber optic cables. The fiber optic module assembly can include two types of modules: a first adapter module and a second adapter module that is different than the first adapter module. In some examples, the first adapter module is a lucent connector ("LC") adapter module and the second adapter module is a multi-fiber push-on ("MPO") module. The LC adapter modules are configured to receive LC connections of a fiber optic cable and the MPO modules are configured to receive the MPO connection of a fiber optic cable. Each side of the LC adapter modules is configured to include a plurality of adapter ports and, in some examples, may be four ports. Each side of the MPO adapter module may be configured to have a single adapter port. In some examples, a fiber optic cable assembly is a breakout cable with an MPO connector that is coupled to a plurality of LC connectors. The number of LC adapter ports in the module assembly can be modified to accommodate any number of LC adapter connectors.

The arrangement of the first and second adapter modules in each row allows for densely arranged connectors, which in turn allows for multiple arrangements and numbers of adapter ports in the patch panel assembly. For example, according to aspects of the disclosure, it is possible to achieve a patch panel assembly arranged on a data rack that has an overall height of 2 rack units ("RU") with 288 LC Adapter ports and 36 MPO adapter ports. Additionally, in examples where the first adapter modules receives fiber optic LC connectors, the first adapter may be configured to receive dual polarity input connectors, which obviates the need to change out the first adapter modules in each tray and utilize a reverse-polarity adapter to reconnect the LC fiber optic connectors after the polarity reversal. Such replacement is a cumbersome process and labor intensive.

As the fiber optic module assemblies are disposed side-by-side in a closely packed arrangement on a slidable tray, good utilization of the space defined in the fiber optic patch panel assembly may be obtained. Additionally, providing an operator access to two types of connectors at the front of the panel assembly allows for better organization of the fiber optic cables, as well as easy user access to all incoming and outgoing cables. The optional use of dual polarity adapter ports can further enhance the flexibility and ease of use with regard to the orientation of incoming fiber optic cables. Thus, the fiber optic module assembly disclosed herein provides a high-density fiber optic panel configuration, ease and quick access, a small footprint for the desired cable, and overall improved connector management and organization.

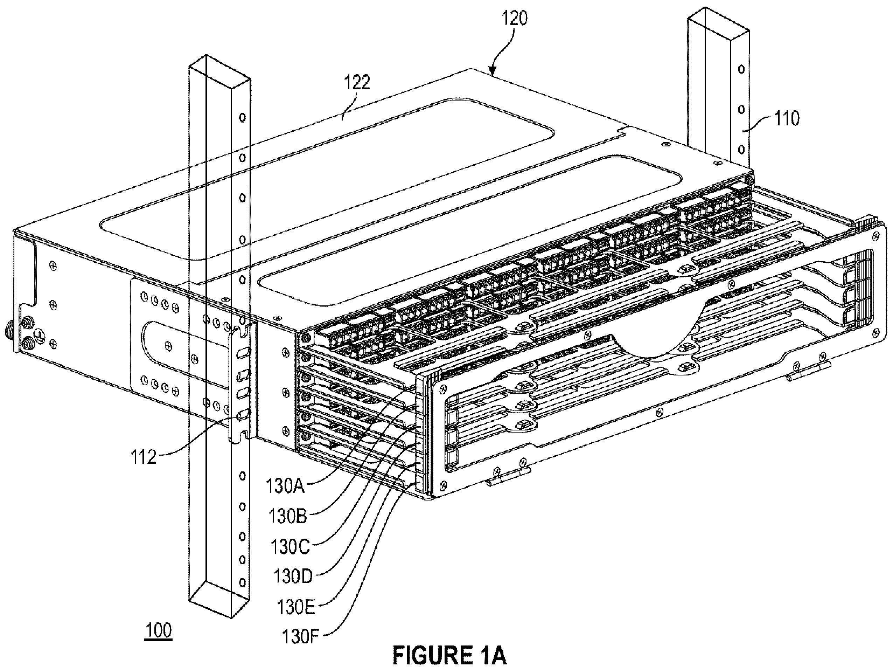

FIGURE 1A depicts an example fiber optic cable management system 100. The system can include a rack 110 and an example fiber optic patch panel assembly 120 (also referred to herein as "patch panel assembly" or "panel assembly"), which is mounted on or to the rack 110 by fastening features 112, such as bolts, nuts or fastening screws. Although only one fiber optic patch panel assembly 120 is shown mounted on or to the rack 110, any number of fiber optic patch panel assemblies may be mounted on or to the rack 110.

The patch panel assembly 120 may house electronic equipment, such as telecommunications equipment. In one example, the fiber optic panel assembly 120 may include an outer housing 122 that houses one or more slidable fiber optic trays. As shown in this example, patch panel assembly 120 includes six fiber optic trays 130A, 130B, 130C, 130D, 130E, 130F (also collectively referred to herein as "trays 130A-130F"), but, in other examples, any number of fiber optic trays may be provided within the patch panel assembly. The six trays 130A, 130B, 130C, 130D, 130E, 130F may be arranged within the housing 122 and stacked vertically one on top of the other.

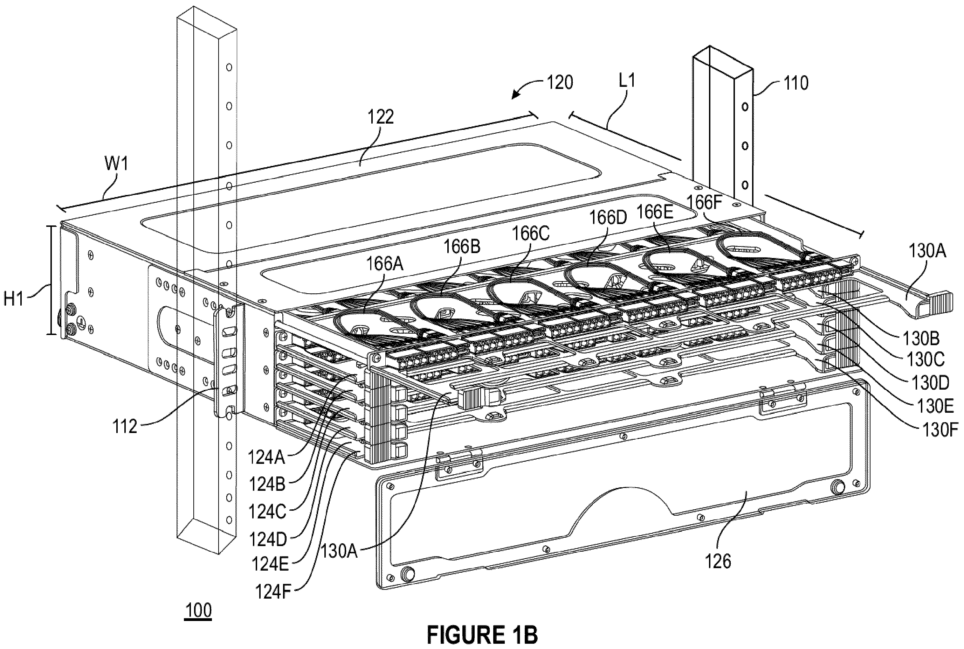

Each fiber optic tray 130A-130F can be individually moved relative to the outer housing 122, as well as moved relative to each of the fiber optic trays in the patch panel assembly 120. FIGURE 1B illustrates the patch panel assembly 120 with the door 126 shown in an open position. This allows for each tray 130A-130F to be pulled out of the outer housing 122 and to allow for easy access to components on the respective trays 130A-130F. As shown, tray 130A is pulled forward out of the housing 122 relative to the other trays in the patch panel assembly 120. In the example shown, each fiber optic tray 130A-130F can slide along and/or be supported by respective support rails 124A, 124B, 124C, 124D, 124E, 124F (also collectively referred to herein as "support rails 124A-124F") that extend away from the exterior of the housing 122. The support rails 124A-124F may also be used to support incoming fiber optic cables that will be attached to ports on each fiber optic tray 130A-130F. Each fiber optic tray 130A-130F can slide along an internal rail (not shown) within the housing 122, as well as outer support rails 124A-124F.

The overall panel assembly can take on any desired size, including any length, width, and height. For example, the length L1 of the panel assembly 120 may range from 300 mm to 500 mm, or be less than 300 mm or greater than 500mm. The width W1 may range from 200 mm to 600 mm, or be less than 200 mm or greater than 600 mm. The height H1 may range from 50 mm to 200 mm, or be less than 50 mm or greater than 200 mm. In one example, the length L1 of the panel assembly 120 may be 405 mm, the width W1 may be 435 mm, and the height H1 may be 89 mm. These dimensions are example dimensions and can widely vary in other examples and to meet specific needs.

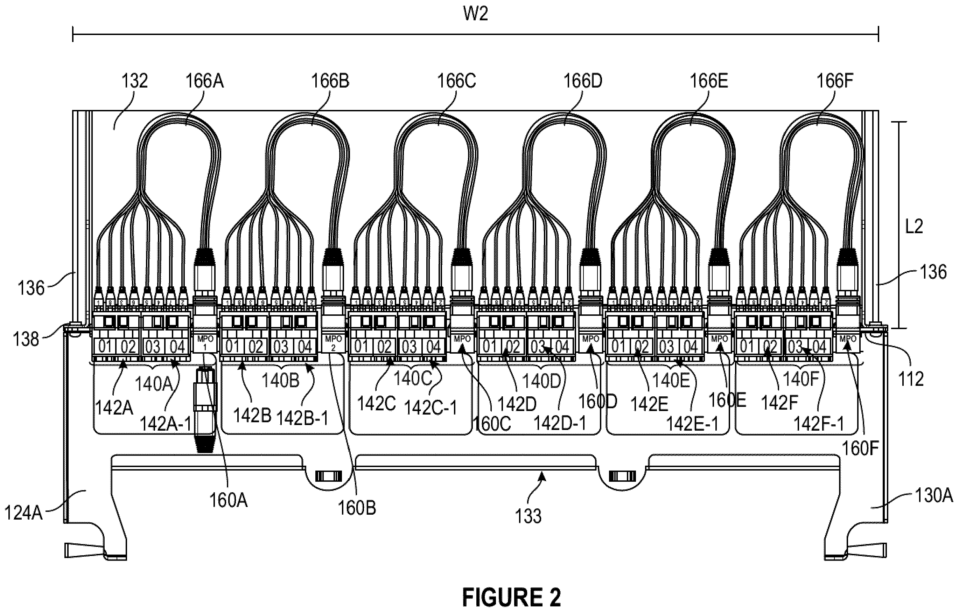

FIGURE 2 illustrates an individual tray 130A that has been removed from the housing 122 (FIGURE 1) of the panel assembly 120 for ease of discussion. The tray includes a rear support portion 132 having a width W2 that is greater than its length L2, as well as a front support portion 133. The tray 130A may further include side rails 136 adjacent the rear support portion 132 to facilitate a sliding movement of the tray 130A within the housing 122. An edge 138 results from the transition of the rear support portion 132 to the front support portion 133. When the tray 130A is positioned within the housing 122 of the panel assembly, the front support portion 133 is positioned exterior to the housing 122 and is supported by the support rail 124A, and the rear support portion 132 is positioned within the housing 122. When the tray 130A is pulled forward out of the housing 122, the front support portion 133 and rear support portion 132 will move along the support rails 124A (FIGURE 1B) so that at least portions of the rear support portion 132 are positioned exterior to the housing 122 of the patch panel assembly 120. In this example, each of the trays 130A-130F in the panel assembly 120 have similar configurations, but in other examples, it may be desired for one or more of the trays to have a different configuration to meet a particular need or application.

As shown in FIGURE 2, a plurality of fiber optic adapter module assemblies may be coupled to each of the trays 130A-130F. In this example, six fiber optic adapter module assemblies extend across the width W2: first module assembly 140A, second module assembly 140B, third module assembly 140C, fourth module assembly 140D, fifth module assembly 140E, and sixth module assembly 140F (also individually referred to as a "module assembly" or collectively referred to as "module assemblies 140A-140F"). As shown, the module assemblies 140A-140F may extend along the entire width W2 of the rear support portion 132 of the tray 130A. Each of the module assemblies 140A-140F are designed to connect two fiber optic cables or fiber optic connectors together. The number of fiber optic module assemblies can increase or decrease depending on the desired arrangement and number of ports required.

Each of the module assemblies 140A, 140B, 140C, 140D, 140E, and 140F may be coupled to the tray 130A using known means. For example, the module assemblies 140A-140F may include a feature, such as a recessed area, a clip, a tab, or the like on the housing of the module assembly 140A-140D, that allows for the module assemblies 140A-140F to be secured within the tray 130A. The module assemblies 140A-140F can alternatively or additionally be attached to the tray 130A using an adhesive or other material that can secure or help to secure the module assemblies 140A-140F in place.

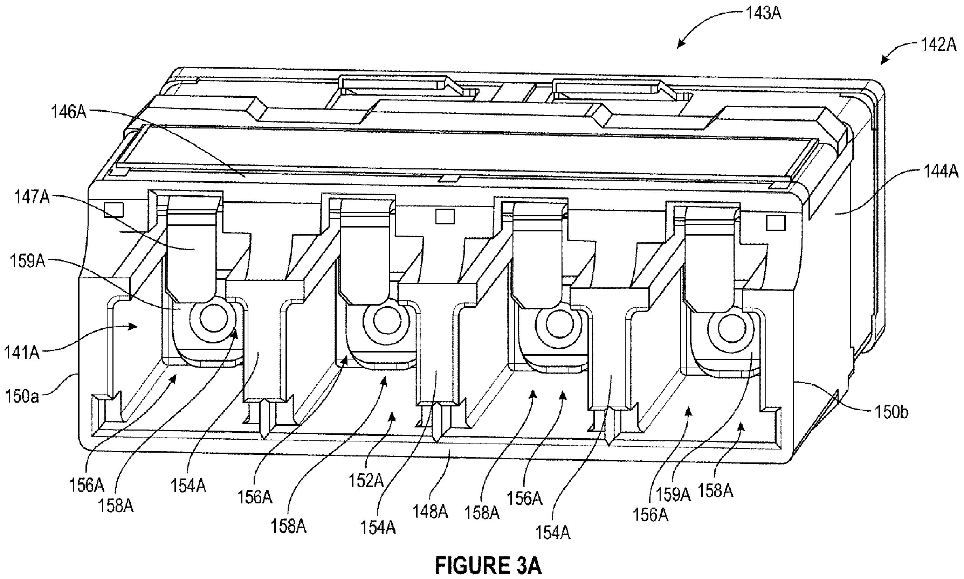

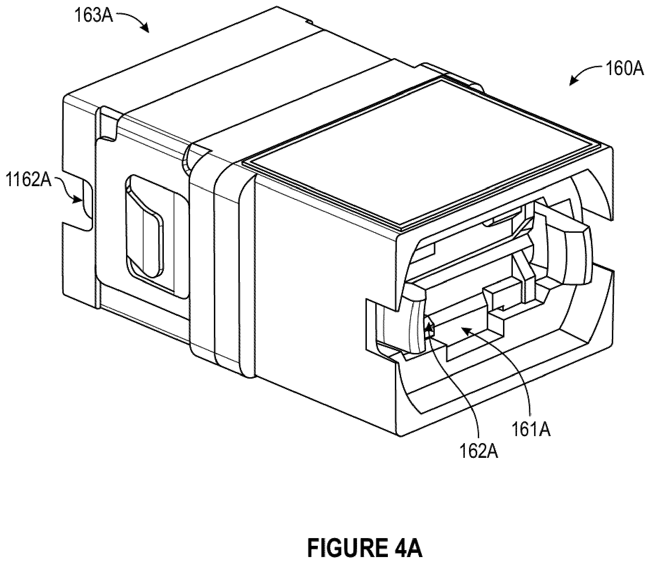

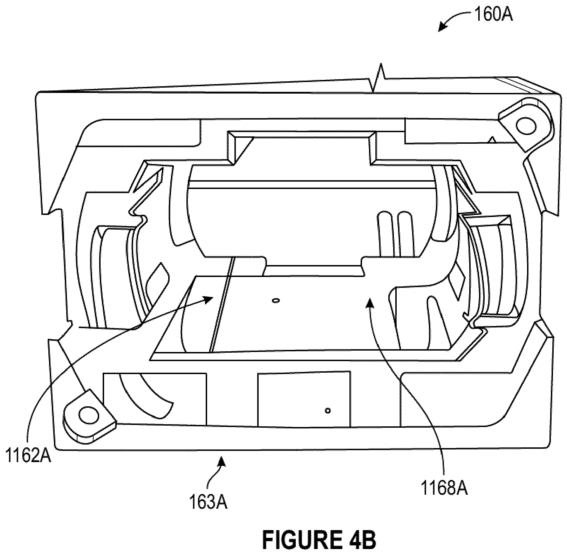

Each of the fiber optic adapter module assemblies 140A, 140B, 140C, 140D, 140E, and 140F may include a combination of adapter modules that are positioned adjacent one another and particularly laterally adjacent one another. In this example, each of the fiber optic adapter module assemblies 140A-140F includes two different types of adapter modules. FIGURES 3A-3B and 4A-4B depict respective perspective views of the two types of adapter modules: a first adapter module may be a lucent connector ("LC") module 142A and a second adapter module may be a multi-fiber push on ("MPO") module 160A. The LC module 142A and MPO module 160A (along with another LC module 142A-1) can collectively form the fiber optic adapter module assembly 140A. In other examples, any number of adapter modules and types of adapter modules may be utilized in the fiber optic adapter module assembly, as will be described in more detail below.

In one example depicted in FIGURE 3A, the LC adapter module 142A of the module assembly 140A includes a front end 141A and a rear end 143A. The LC adapter module 142A further includes a housing 144A that includes a top wall 146A, a bottom wall 148A, a first side wall 150a, and a second side wall 150b connecting the top wall 146A and the bottom wall 148A and extending between the front end 141A and rear end 143A. At the front end 141A, the top wall 146A, the bottom wall 148A, and the first and second side walls 150a, 150b define an interior region 152A, such as a passage. The interior region 152A of the housing 144A is divided by a plurality of partition walls 154A, defining multiple front adapters 156A with multiple front connector connection ports 158A therein. Each adapter connection port 158A can further include a contact portion 159A for contacting an incoming fiber optic cable connector. Each partition wall 154A is connected from the top wall 146A to the bottom wall 148A. Each connector connection port 158A is configured to receive a fiber optic connector and, in this example, an LC connector.

The LC module 142A, including its front adapters 156A, may serve as a termination point between an incoming fiber optic cable connected through a front end 141A of the LC adapter module 142A and an outgoing fiber optic cable, such as the cable 166A, connected through a fiber optic connector extending through a rear end 143A of the LC adapter module 142A. In this example, the LC adapter module 142A may further include an inner shutter 147A that opens and closes depending upon whether there is an incoming fiber optic cable within the LC adapter module 142A.

The top wall 146A, the bottom wall 148A, and the first and second side walls 150a,150b of the housing 144A, as well as the partition walls 154A, may be integrally formed as an integral body from a polymeric material, such as molded plastic.

In the example depicted in FIGURE 3A, the front end 141A of the LC adapter module 142A includes four front connector connection ports 158A connected together into a single unit, such as in a line or stack. This configuration can save space and maximize the usage of the available space among the adapters. It is noted that the first LC adapter module 142A may have any number of adapters, such as at least one, at least two, at least three, at least four, at least five, at least six, or other numbers, as needed for different configurations of the patch panel on which the adapter module 142A is configured to be mounted. The adapters may be configured to couple with a small form factor fiber optic connector, such as a lucent connector ("LC"), but in other configurations, the front adapters 156A may be configured to couple with other types of connectors. In some examples, the LC may be a small form factor connector that uses a 1.25 mm ferrule.

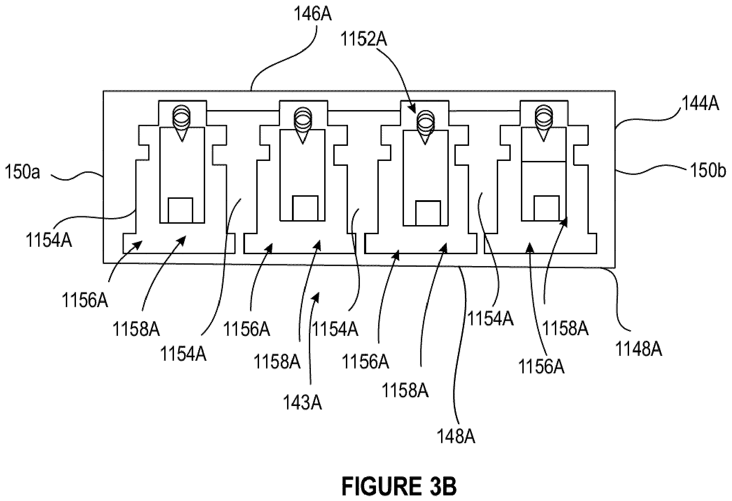

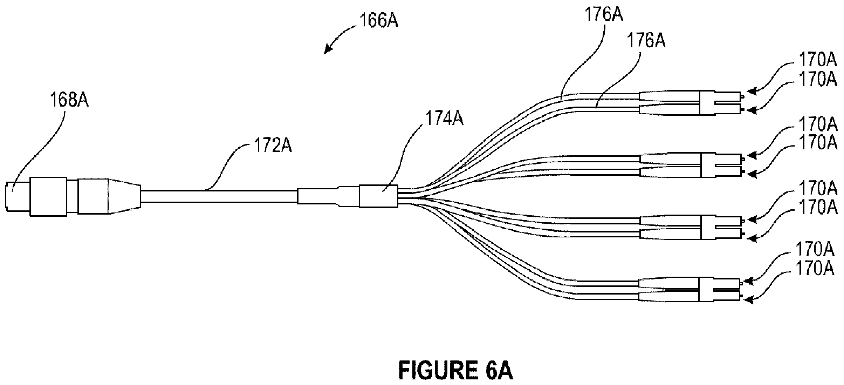

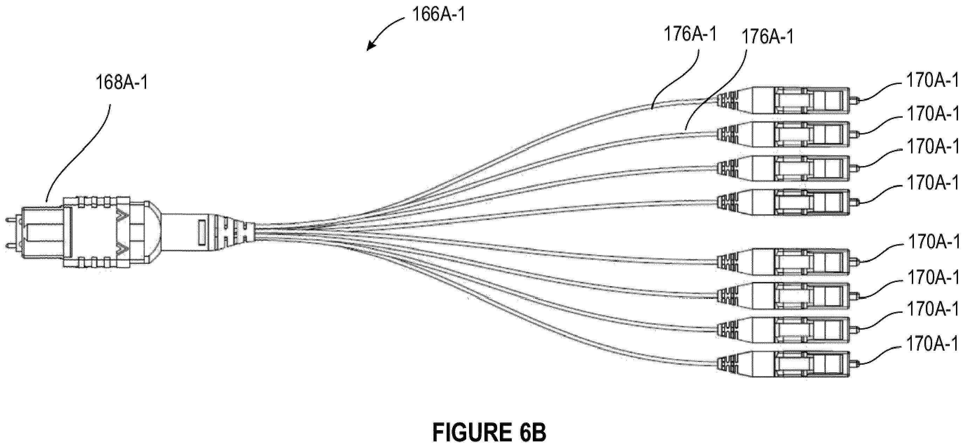

FIGURE 3B illustrates the rear end 143A of the LC adapter module 142A. As shown, the top wall 146A, the bottom wall 148A, the first and second side walls 150a, 150b also define an interior region 1152A at the rear end 143A of the LC adapter module 142A, such as a passage. The interior region 1152A of the rear end 143A of the housing 144A is also divided by a plurality of partition walls 1154A, defining multiple rear adapters 1 15 6A with multiple connector connection ports 1158A therein. Each partition wall 1154A may be connected from the top wall 146A to the bottom wall 1148A. In other examples, the partition wall 1154A at the front end 141A of the LC adapter module 142A can be the same partition wall that extends through to the rear end 143A of the LC adapter module 142A. Each connector connection port 1158A is configured to receive a fiber optic connector from an adapter, such as the fiber optic connector discussed with regard to FIGURES 6 and 6A below.

In some examples, the LC adapter module may be a dual polarity adapter to allow for easy interconnection of the input connections at the front end 141A of the LC adapter module. The LC modules may be dual polarity modules that include dual polarity adapters and ports configured to receive a dual polarity fiber optic cable. Examples of dual polarity adapters will be discussed in more detail below.

FIGURES 4A-4B illustrate an example of a second type of adapter module, which in this example is a multi-fiber push-on ("MPO") adapter module 160A. MPO adapter module 160A includes a front end 161A with a single connection port 16A and a rear end 163A with a single connection port 1162A. In this example, the MPO adapter module 160A is configured to receive a different type of connector than the LC adapter module 142A (FIGURES 3A-3B). For example, each connection port 162A, 1162A of the second adapter module 160A may be respectively configured to receive a fiber optic cable with a connector including multiple optical fibers, such as an MPO connector. An MPO fiber optic cable connector is typically an array connector that includes more than two fibers, and is typically available with 8, 12, or 24 fibers for data center and fiber optic local area network ("LAN") applications.

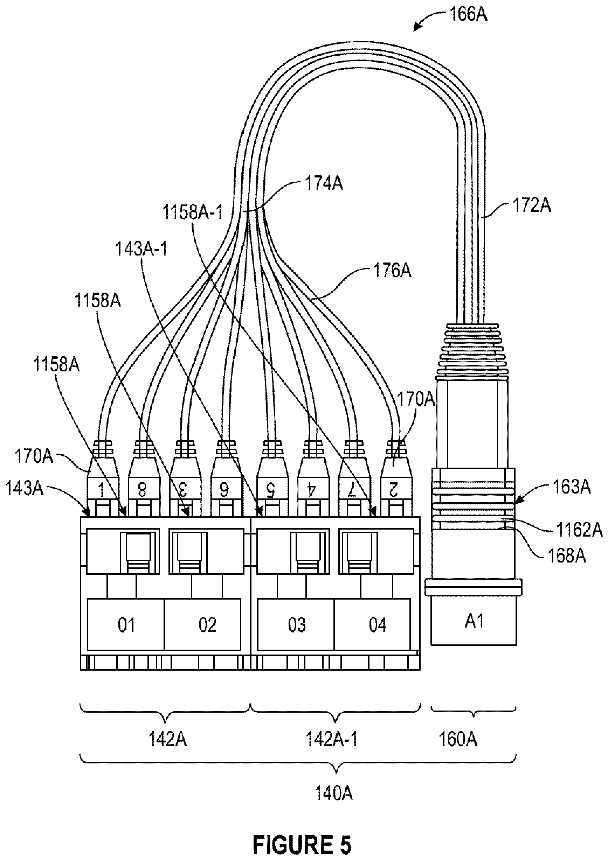

FIGURE 5 illustrates an enlarged view of the fiber optic module assembly 140A removed from the tray shown in FIGURE 2 for ease of discussion. In this example, the first fiber optic adapter module assembly 140A includes a first LC adapter module 142A, a second LC adapter module 142A-1, which is identical to the first LC adapter module 142A and will not be described in further detail, and tan MPO adapter module 160A. It is to be appreciated that although the first fiber optic module assembly 140A includes two LC adapter modules 142A, 142A-1 that each have four ports for a total of eight parts (four ports an LC adapter module 142A and four ports on LC adapter module 142A-1), any combination of LC adapter modules that total eight ports can be used in this example. For instance, a single LC adapter module with eight ports can be used. Alternatively, four LC adapter modules may be used where each LC adapter module only includes two ports, such that collectively the four LC adapter modules have eight ports. In still another example, three LC adapter modules may be utilized, where a first LC adapter module includes four ports, a second LC adapter module includes two ports, and a third LC adapter module includes two ports. Thus, any combination of LC adapter modules may be used to achieve the desired number of ports. Furthermore, while in this example eight ports are desired for the first adapter module assembly 140A, in other applications, it may be desired to increase or decrease the overall number of LC ports.

The LC module assembly 142A can be configured to mate with a fiber optic multi-fiber array cable assembly. An example multi-fiber array cable assembly may be an MPO-to-LC fiber patch cable array assembly, such as the example cable assembly 166A. FIGURE 6A illustrates an enlarged view of cable assembly 166A removed from the first LC adapter module 142A. The cable assembly 166A includes a connector 168A, such as an MPO8 connector, that is coupled to an array of eight individual LC connectors 170A. As shown, a primary fiber wire 172A may be joined to and extend from the MPO8 connector 168A and, at a junction 174A, break out into eight individual wires 176A respectively coupled to each of the eight LC connectors 170A. FIGURE 6B illustrates another example cable assembly 166A-1. Cable assembly 166A-1 includes a connector 168A-1, such as an MPO8 connector, that is coupled to an array of eight individual LC connectors 170A-1. As shown, eight individual wires 176A-1 are respectively coupled to each of the eight LC connectors 170A-1.

With reference back to FIGURE 5, one end of the cable assembly 166A can be connected to the port 1162A at the rear end 163A of the MPO module assembly 160A and the other end of the cable assembly 166A connects to the respective port 115 8A at the rear end 143A of the first LC adapter module 142A and the port 1158A-1 at the rear end 143A-1 of the second LC adapter module 142A-1. While in this example an MPO-to-LC cable assembly is used, other types of fiber optic cable assemblies and/or connectors may be utilized that will couple to the slot and/or ports in the fiber optic module assembly. For example, the primary MPO connector 168A may instead be an MPO16, MPO24, or another MPO connector with any desired number of corresponding connectors 170A. Similarly, the array of connectors 170A at the opposite end of the cable 166A may be a different type of connector, instead of an LC connector.

With reference back to FIGURE 2, the density of fiber interconnections may be maximized by arranging multiple adapter module assemblies side-by-side on a server rack. In this manner, each of the adapter module assemblies abut one another, thus eliminating wasted space between them, and providing a maximum density of connection adapters for the available opening space in the patch panel. In this example, each of the fiber optic adapter module assemblies may be identical to one another and arranged side-by-side, but in other examples one or more of the module assemblies may differ. In this manner, each of the adapter modules 140A, 140B, 140C, 140D, 140E, 140F abut one another, thus eliminating wasted space, and providing a maximum density of connection adapters for the available opening space in the patch panel.

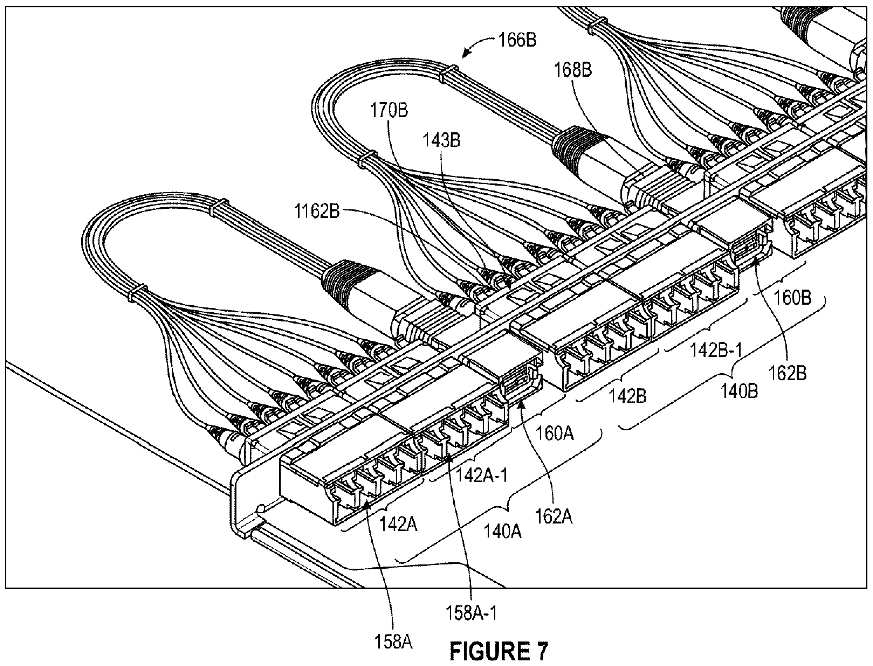

FIGURE 7, an enlarged perspective view of a portion of the tray shown in FIGURE 2, illustrates a second fiber optic adapter module assembly 140B. The second module assembly 140B can be identical to the first module assembly 140A and will include the same features; second module assembly 140B will not be discussed in extensive detail for brevity and ease of discussion. The second module assembly 140B includes two LC adapter modules 142B, 142B-1 and an MPO adapter module 160B. As shown, the second module assembly 140B is directly adjacent the first adapter module assembly 140A, and more particularly, the LC adapter module 142B is positioned directly adjacent and abuts the MPO adapter module 160A of the first module assembly 140A. Put another way, LC adapter module 142B is laterally adjacent MPO adapter module 160A. The second module assembly 140B is also connected to a multi-fiber array cable assembly, such as the multi-fiber array cable assembly 166B. The cable assembly 166B may have a first end with an MPO connector 168B connected to the port 162B of the MPO adapter module 160B of the second module assembly 140B. At a second end of the cable assembly 166B, connectors 170B may be coupled to the ports 1162B at the rear end 143B of the LC adapter module 142B.

Referring back to FIGURE 2, additional fiber optic module assemblies may be provided along the width W2 of the tray 130A. Each of the additional fiber optic module assemblies 140C, 140D, 140E, and 140F may be identical to the arrangement of the fiber optic module assemblies 140A, 140B. Similar to the fiber optic module assembly 140A, each of the additional fiber optic module assemblies 140C, 140D, 140E, and 140F can include two LC adapter modules and an MPO adapter module. For example, fiber optic module assembly 140C includes two LC adapter modules 142C, 142C-1 and MPO adapter module 160C. Fiber optic module assembly 140D includes two LC adapter modules 142D, 142D-1 and MPO adapter module 160D. Fiber optic module assembly 140E includes two LC adapter modules 142E, 142E-1 and MPO adapter module 160E. Fiber optic module assembly 140F includes two LC adapter modules 142F, 142F-1 and MPO adapter module 160F. Corresponding cable assemblies 166C, 166D, 166E, 166F are also shown coupled to each of the additional and respective fiber optic module assemblies 140C, 140D, 140E, 140F. In this example, cable assemblies 166C, 166D, 166E, 166F may be identical to the cable assemblies 166A, 166B and similarly connected to the respective fiber optic module assemblies 140C, 140D, 140E, 140F.

The configuration of tray 130A shown in FIGURE 2 illustrates the presence of six module assemblies 140A-140F. The side-by-side arrangement allows for the maximum amount of connections on the tray, as well as improves the ability of an operator to easily access the cable assemblies 1 66A-166F and fiber optic modules 142A-142F. The reduced length of the cable assembly also utilizes less space on the tray 130A and minimizes cord entanglements created by tangled adjacent cord assemblies, as well as entanglements caused by the cord assembly itself. This eliminates the need to provide a cover on the tray or to include separate components on the tray to further house the cable assemblies 166A-166F.

With reference back to FIGURES 1A-1B, each of the additional trays 130B, 130C, 130D, 130E, 130F in the patch panel assembly 120 may be identical to tray 130A shown in FIGURE 2 and include identical components. Each of the trays may individually move relative to one another and independently of one another. As shown in FIGURE 1B, tray 130A is an open tray shown in the pulled-out position. Tray 130A does not include any covers or components, such as cartridges, that further house one or more portions of the cable assembly. This eliminates the need to detach, unscrew, open, or otherwise remove a housing from the tray to expose the fiber optic module assemblies 140A-140F and the corresponding cable assemblies 166A-166F. As a result, the fiber optic components, such as the module assemblies 140A-140F and cable assemblies 166A-166F, are immediately exposed and accessible when the tray 130A is pulled forward and out of the housing 122. The side-by-side arrangement of the fiber optic module assemblies 140A-140F and corresponding cable assemblies 166A-166F provides an operator with direct and hassle-free access to the fiber optic components at the rear of the tray, including the cable assemblies 166A-166F, when it is necessary to make adjustments, changes, and the like to the wire connectors or adapter modules as needed. Further, the ability of each of the individual trays 130A-130F to move relative to one another provides the operator with direct and easy access to each of the trays 130A-130F in the patch panel assembly 120.

Each tray 130A-130F provides twelve (12) LC adapter modules, each of the LC adapter modules providing four (4) adapters for a total of forty-eight (48) LC adapter connections or ports for receiving fiber connectors, as well as six (6) MPO ports. Put another way, in this example, each of the module assemblies provides for the combination of eight (8) LC ports and one (1) MPO port at the front end of the tray for a total of 48 LC ports and 6 MPO ports on a single tray 130A. In this configuration, where there are six trays 130A-130F, and 48 connectors per tray, there are a total of 288 LC adapter connections. Additionally, with six (6) MPO adapter modules per tray and six trays 130A-130F, there are 36 MPO adapter connections.

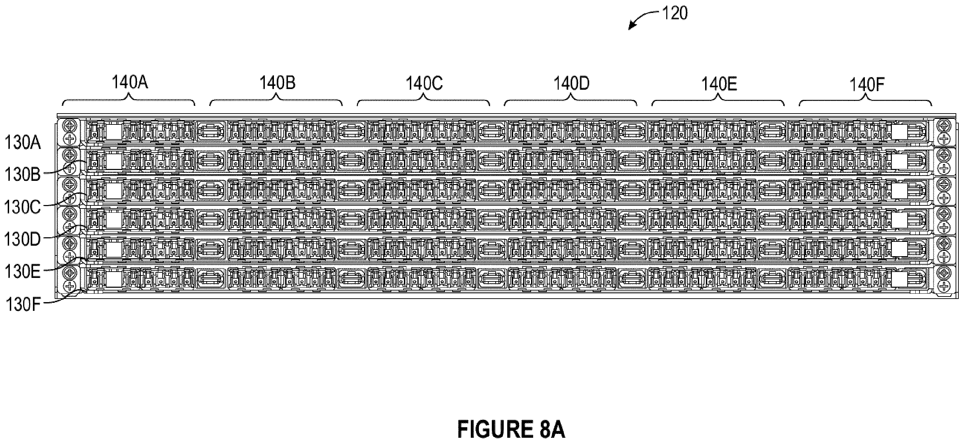

The collective configuration of LC adapter ports on the trays 130A-130F in the panel assembly 120 are best shown in FIGURE 8A, which for ease of illustration, shows a front view of the ports of the entire patch panel assembly 120 detached from the rack 110 (FIGURE 1A) and with the exterior support rails 124A-124F (FIGURE 1B) removed. Each row includes one of the individual trays 130A-130F with six fiber optic module assemblies that are similar to adapter module assemblies 140A-140F and where each of the adapter module assemblies 140A-140F each include two LC adapter modules and one MPO module, as previously described herein.

The height of equipment designed to mount in a data rack, such as patch panel assembly 120, may be defined in rack units ("RU") and the overall height of the equipment arranged on a data rack can be expressed as multiples of rack units. One RU is commonly known in the industry as approximately 1 314 inches in height or 1.75 inches, but if desired, RU can be modified. The patch panel assembly 120 is an example of a 288-port unit that occupies a height of 2 rack units ("RU"). The RU unit can describe the height of equipment designed to mount in a data rack. In this example, the height of three slidable fiber optic trays within the patch panel assembly, including the spacing between the trays is approximately equal to 1 RU. Trays 130A-130C (FIGURE 1A) may have a height of 1RU and trays 130D-130F (FIGURE 1A) may have a height of 1RU, such that the six slidable fiber optic trays collectively occupy a height of 2RU. It will be appreciated that other sized units also can be made in accordance with principles of the present disclosure. For example, other embodiments can include 72-port units that occupy three (3) Rus, 96-port units that occupy four (4) Rus, 144-port units that occupy six (6) Rus, 288-port units that occupy twelve (12) Rus, and 432-port units that occupy eighteen (18) Rus. Some examples will be discussed in more detail below.

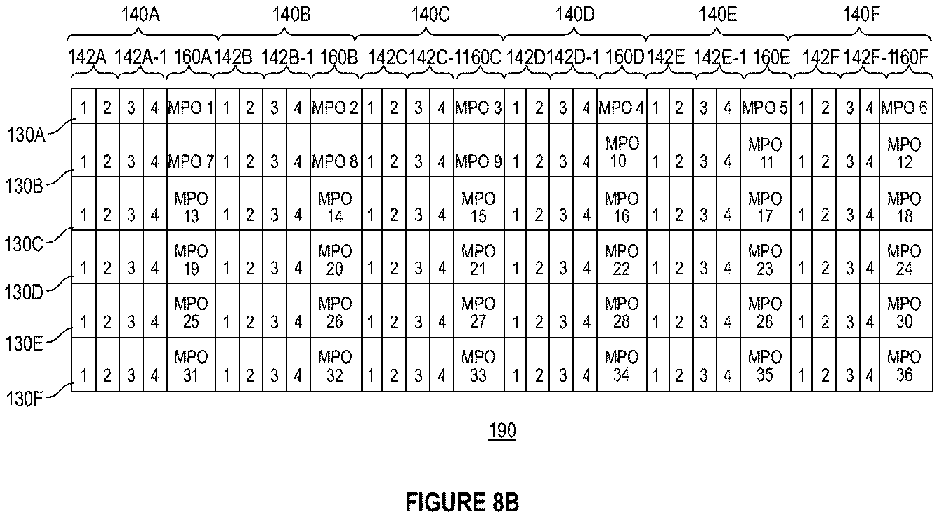

The arrangement of the components on the trays allows for easy port mapping of the patch panel assembly 120. As shown in FIGURE 8B, a port map 190 schematically illustrates the components on each of the trays 130A-130F. The plurality of module assemblies 140A, 140B, 140C, 140D, 140E, 140F of the first tray 130A are schematically shown in the top row of port map 190. LC adapter modules 142A, 142A-1, 142B, 142B-1, 142C, 142C-1, 142D, 142D-1, 142E, 142E-1, 142F, 142F-1 are also schematically represented. Each of the module assemblies 140A-140F includes similar designations: "1," "2," "3," "4," and an "MPO" number, which correspond to available ports on the tray and which can also be numbered on each of the LC adapter modules. For example, adapter module 142A includes "1" and "2" designations, where the "1" corresponds to the first two ports 158A of adapter module 142A and the "2" corresponds to the last two ports 158A of adapter module 142A, as shown in FIGURE 7. This indicates that each number (i.e., "1" or "2") corresponds to two ports, such that four ports are available for connection in adapter module 142A. A similar configuration follows for the "3" and "4" designations on the adapter module 142A-1 of module assembly 140A, which is identical to the adapter module 142A. The "3" corresponds to the first two ports 158A-1 of adapter module 142A-1, and the "4" corresponds to the last two ports 158A-1 of adapter module 142A-1, as also shown in FIGURE 7. The "MPO 1" designation corresponds to the MPO port 162A of MPO adapter module 160A (FIGURE 7). This same configuration carries out for each of the module assemblies within each of the trays 130A-130F in the patch panel assembly 120, which allows for easy port mapping of the patch panel assembly 120. It is noted that each MPO adapter module is sequentially numbered in the port map 190 and in this example, there are 36 MPO modules.

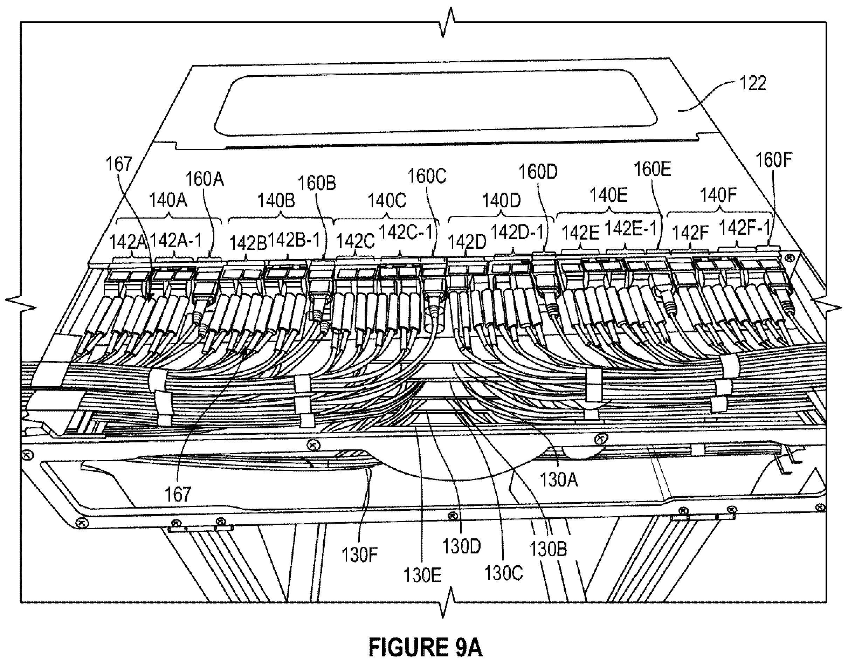

FIGURE 9A illustrates an example arrangement in which incoming fiber optic cables are shown connected to the front ends of the fiber optic module assemblies on the various trays 130A-130F. For example, incoming fiber optic cables 167 are connected to the adapter module assemblies 140A-140F of first tray 130A. As shown in this example, the incoming fiber optic cables 167 will have LC connectors that couple with the LC adapter modules 142A, 142A-1, 142B, 142B-1, 142C, 142C-1, 142D, 142D-1, 142E, 142E-1, 142F, 142F-1, as well as MPO connectors that couple with the MCO adapter modules 160A, 160B, 160C, 160D, 160E, 160F. With the MPO adapter modules 160A-160F positioned directly adjacent the respective LC adapter modules 142A-1, 142B-1, 142C-1, 142D-1, 142E-1, 142F-1 in each respective module assembly 140A, 140B, 140C, 140D, 140E, 140F, all of the incoming cables 167 can easily be easily accessed and arranged. Incoming cables 167 will also be connected to the adapter module assemblies (not visible) on the remaining trays 130B-130F. Trays 130B-130F can include a similar arrangement as tray 130A, such that all incoming cables to the patch panel assembly 120 can be easily accessed at the front of the panel assembly 120. The rear ends of the module assemblies and wire assemblies are positioned within the panel assembly housing 122 and are not visible when the trays are in the closed position. Thus, in addition to the cable assemblies 166A-166F at the rear of the trays (FIGURE 1B) being easily accessible, all of the cable assemblies 167 at the front of the patch panel assembly 120 are also easily accessible. This arrangement eliminates the need to detach, unscrew, open, or otherwise remove a housing from the tray to expose or access an incoming cable of the patch panel assembly 120. As will be discussed below, in examples where the LC adapter modules 142A, 142A-1, 142B, 142B-1, 142C, 142C-1, 142D, 142D-1, 142E, 142E-1, 142F, 142F-1 are dual polarity adapter modules, such arrangement can provide even greater ease with regard to assembling incoming fiber optic cables 167.

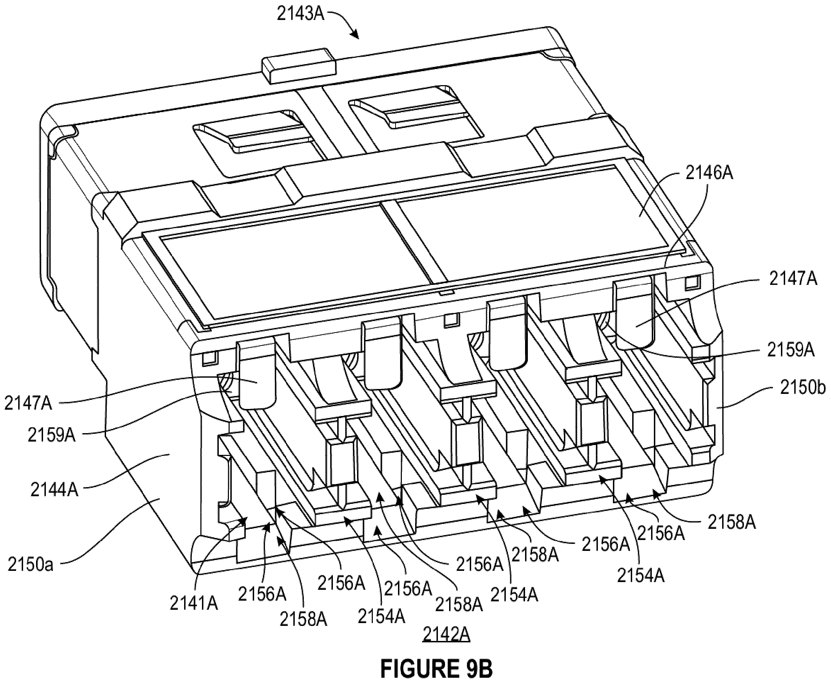

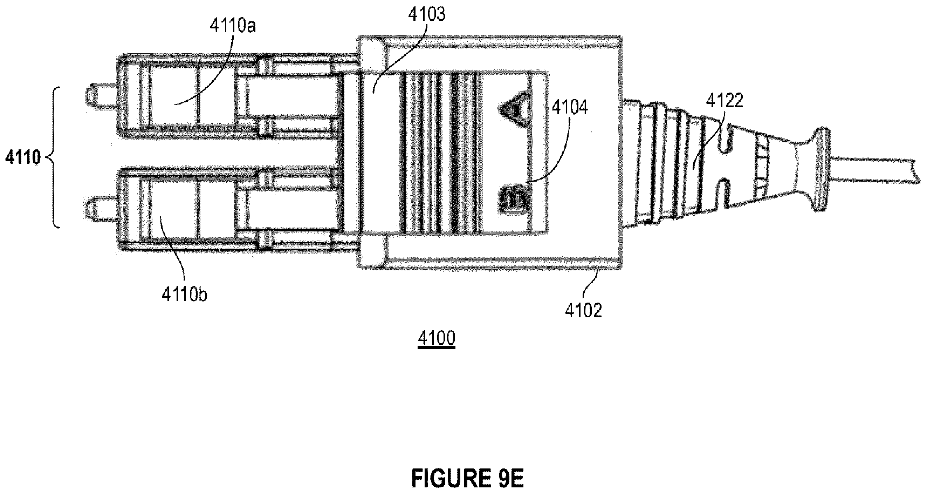

FIGURES 9B-9D illustrate views of another LC adapter module in accordance with an example of the present disclosure. The LC adapter module 2142A includes a plurality of connection ports 2158A. The connection ports 2158A are dual polarity connection adapter or parts that may accommodate different orientations and geometrical configurations of a fiber optic connector configured to have more than one polarity configuration. Examples of such fiber optic connectors will be described in greater detail with regard to FIGURES 9E-9G. In the example depicted in FIGURE 9B, LC adapter module 2142A includes four connection ports 2158A connected together, such as in a line or stack, so as to save space and maximize the usage of the space among the connection ports 2158A. It is noted that the LC adapter module 2142A may have any numbers of connection ports 2158A, such as at least one, at least two, at least three, at least four, at least five, at least six, or other numbers, as needed for different configurations of the patch panel on which the LC adapter module 2158A is configured to be mounted. The LC adapter module 2142A can be used in place of LC adapter modules previously described herein and as will be discussed throughout the application and in combination with MPO module 2160A (along with another LC module) to collectively form the fiber optic adapter module assemblies, similar to fiber optic adapter module assembly previously described in FIGURES 1-8B. In other examples, any number of adapter modules and types of adapter modules may be utilized in the fiber optic adapter module assembly, as will be described in more detail below.

In one example, as depicted in FIGURE 9B, the LC adapter module 2142A of the module assembly 2140A includes a front end 2141A and a rear end 2143A. The LC adapter module 2142A further includes a housing 2144A that includes a top wall 2146A, a bottom wall 2148A, a first side wall 2150a, and a second side wall 2150b connecting the top wall 2146A and the bottom wall 2148A and extending between the front end 2141A and rear end 2143A. At the front end 2141A, the top wall 2146A, the bottom wall 2148A, and the first and second side walls 2150a,2150b define an interior region 2152A, such as a passage. The interior region 2152A of the housing 2144A is divided by a plurality of partition walls 2154A, defining multiple front adapters 2156A with multiple front connector connection ports 2158A therein. Each adapter connection port 2158A can further include a contact portion 2159A for contacting an incoming fiber optic cable connector. Each partition wall 2154A is connected from the top wall 2146A to the bottom wall 2148A. Each connector connection port 2158A is configured to receive a fiber optic connector, which in this example, may be an LC connector, as described in more detail below in the discussion of FIGURES 9E-9G.

LC adapter module 2142 and each of its adapters 2156A may serve as a termination point between an incoming fiber optic cable connected through a front end 2141A of the LC adapter module 2142A and an outgoing fiber optic cable, such as the cable 166A or 166A-1, connected through a fiber optic connector extending through a rear end 2143A of the LC adapter module 2142A. In this example, the LC adapter module 2142A may further include an inner shutter 2147A that opens and closes depending upon whether there is an incoming fiber optic cable within the LC adapter module 2142A.

Although the example depicted herein has four adapters 2156A and corresponding connection ports 2158A defined in LC adaptor module 2142A, the number of connection ports 2158A formed, configured in, or connected to form LC adaptor module 2142A may include any number of adapters and ports, as needed.

The top wall 2146A, the bottom wall 2148A, and the first and second side walls 2150a, 2150b of the housing 2144A, as well as the partition walls 2154A, may be integrally formed as an integral body from a polymeric material, such as molded plastic.

In the example depicted in FIGURE 9B, front end 2141A of the LC adapter module 2142A includes four front connector connection ports 2158A connected together into a single unit, such as in a line or stack. This configuration can save space and maximize the usage of the available space among the adapters. It is noted that the first LC adapter module 2142A may have any numbers of connector ports, such as at least one, at least two, at least three, at least four, at least five, at least six, or other numbers, as needed for different configurations of the patch panel on where the adapter module 2142A is configured to be mounted. The connector ports may be configured to couple with a small form factor fiber optic connector, such as a lucent connector ("LC"), but in other configurations, the front adapters 2156A may be configured to couple with other types of connectors. In some examples, the LC may be a small form factor connector that uses a 1.25 mm ferrule.

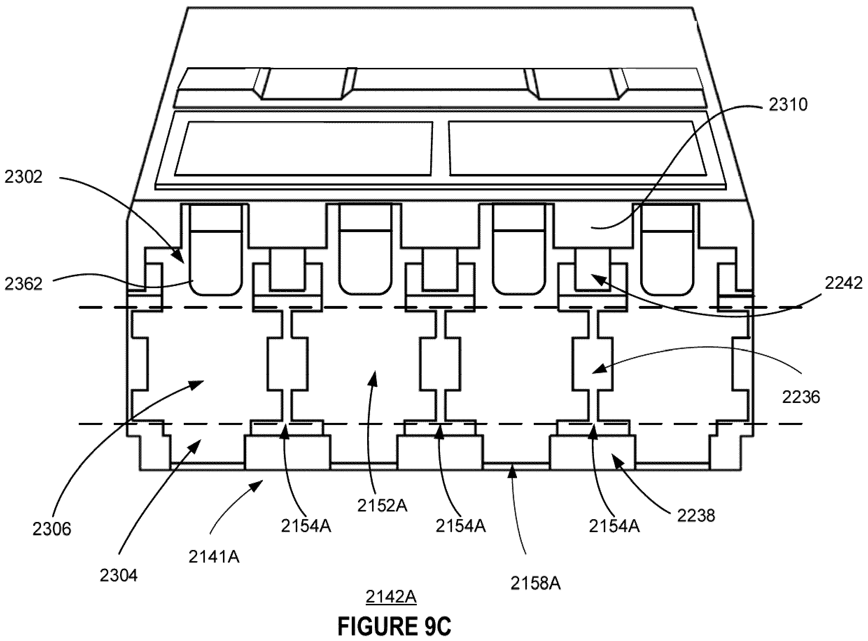

FIGURE 9C depicts another front view of LC adaptor module 2142A. Partition wall 2154A positioned in the interior region 2152A defines the connector connection ports 2158A in each adaptor 2156A. Each partition wall 2154 has three portions, the first portion 2242 and the second portion 2238 with the center portion 236 sandwiched therebetween. The first portion 2242 formed in each partition wall 2154A horizontally defines a first slot 2302 and the second portion 2238 formed in each partition wall 2154A horizontally defines a second slot 2304 while the center portion 2236 horizontally defines a center slot 2306, as shown in the dotted lines, in the connector connection ports 215. The first slot 2302, the second slot 2304 and the center slot 2306 are in open communication forming a passageway that allows a fiber optic connector (such as will be described in FIGS. 9E-9G) to be inserted therein.

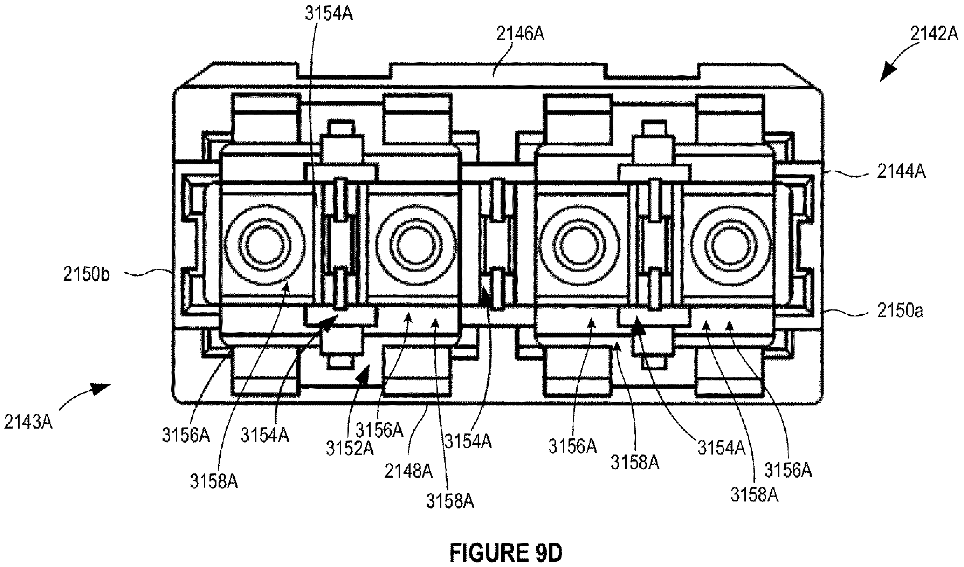

FIGURE 9D illustrates the rear end 2143A of the LC adapter module 2142A. As shown, the top wall 2146A, the bottom wall 2148A, the first and second side walls 2150a, 2150b also define an interior region 3152A at the rear end 2143A of the LC adapter module 2142A, such as a passage. The interior region 3152A of the rear end 2143A of the housing 2144A is also divided by a plurality of partition walls 3154A, defining multiple rear adapters 3156A with multiple connection ports 3158A therein. Each partition wall 3154A may be connected from the top wall 2146A to the bottom wall 2148A. In other examples, the partition wall 3154A at the front end 2141A of the LC adapter module 2142A can be the same partition wall that extends through to the rear end 2143A of the LC adapter module 2142A. Each connector connection port 3158A is configured to receive a fiber optic connector from an incoming fiber optic cable. A fiber optic cable, such as previously discussed with regard to FIGURES 6A or 6B above, are non-exhaustive examples of fiber optic cables that can be implemented.

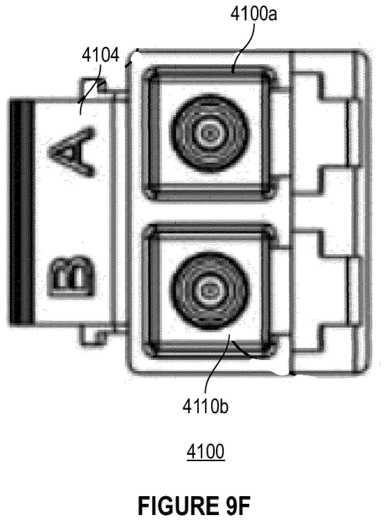

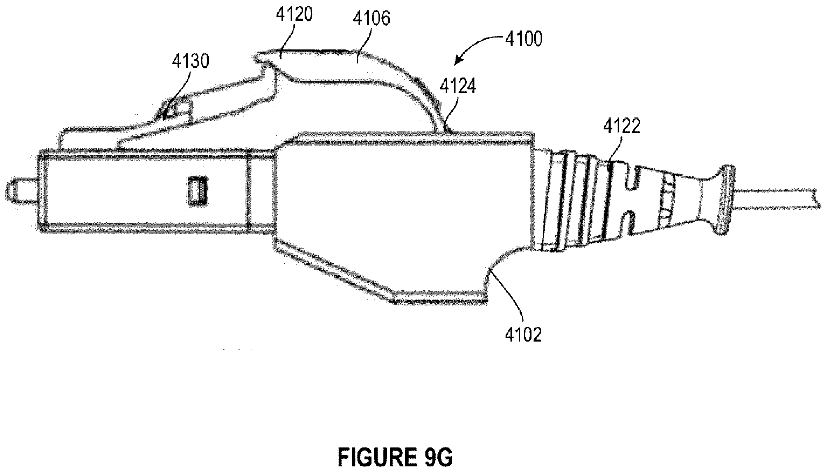

FIGURES 9E - 9G depict an example of a fiber optic connector 4100 that provides dual polarity configurations and can be used in connection with adapter modules, such as LC adapter module 2142A. FIGURE 9E depicts a top view of the fiber optic connector 4100. The fiber optic connector 4100 comprises a body 4102 that has two connector assemblies 4110 (shown as 4110a , 4110b ) connected thereto. FIGURE 9F depicts a front view of the fiber optic connector 4100 illustrating the two connector assemblies (shown as 4110a , 4110b) formed at a front section 4103 of the fiber optical connector 4100. Connector polarity indicia 4104 is formed in the body 4102 that indicates the polarity of the connector 4100. The body 4102 encases two optical fibers connecting to the two connector assemblies 4110a, 41 10b respectively . The two optical fibers enclosed in the body 4102 are connected to a cable 4122 connected to the body 4102. FIGURE 9G depicts a side view of the fiber optic connector 4100. A latch 4106 has a first end 4120 connected to the connector assemblies 4110a, 4110b through a spring latch arm 4130 and a second end 4124 connected to the body 4102. The latch 4106 is used to secure the fiber optical connector 4100 to an adapter. The spring latch arm 4130 releasably engages the latch 4106. The spring latch arm 4130 may be pressed to disengage from the latch 4106. When the spring latch arm 4130 is released and disengaged from the latch 4106, the connector assemblies 4110a, 4110b may be inserted into an adapter in a predetermined insertion direction. The adapter may be mounted to a tray, such as previously disclosed herein in a fiber management system. The latch 4106 abuts against the spring latch arm 4130 connected to the connector assemblies 4110a, 4110b for manually pressing the latter to move downwardly to allow disengagement between the connector assemblies 4110a, 4110b and the adapter and removal of the connector assemblies 4110a, 4110b out of the port. When a reversal of the polarity configuration is desired, the spring latch arm 4130 may be pressed to discharge the connector assemblies 4110a, 4110b from the body 4102. The connector assemblies 4110a, 4110b may then be flipped and rotated 180 degrees for polarity reversal and the latch 4106 will then be re-attached to the opposite side of the body 4102.

With reference back to LC adapter module 2142, shown in FIGURE 9C, center slot 2306 may be configured to receive fiber optic connector 4100 while the first slot 2302 and the second slot 2304 may be configured to receive the latch 4106 from fiber optical connector 4100. In one example, when the fiberoptic connector 4100 is in a standard polarity configuration, the latch 4106 may be engaged with the first slot 2302. In contrast, in a reversed polarity configuration, the position of the latch 4106 may be rotated 180 degrees relative to the position of the latch 4106 in a standard or straight polarity configuration. In this regard, the latch 4106 may be then engaged with the second slot 2304 instead, in light of the rotation of the fiber optical connector 4100.

In other examples, when standard polarity is configured to have the latch 4106 positioned downward, the latch 4106 may be engaged in the second slot 2304 while the connector assemblies 4110 are engaged with the center slot 2306. In contrast, when reversed polarity is configured to have the latch 4106 flipped-oppositely and positioned upward, the latch 4106 may be engaged in the first slot 4302 while the connector assemblies 4110 are engaged with the center slot 2306. A marking section 2310 may be formed either at an upper end of the partition wall 2225, such as in the first portion 2242, or at a lower end of the partition wall 2225, such as in the second portion 2238, or other suitable places to provide a bold visual indication to the technician of the polarity configurations. In the example depicted in FIGURE 9C, the marking section 2310 indicates standard polarity of the fiber optical connector 4100 when the latch 4106 is engaged with the first slot 2302. It is noted that the marking section 2310 may be formed at different locations of the adapter 2250 as needed to facilitate indication of polarity configurations for the technician and operator.

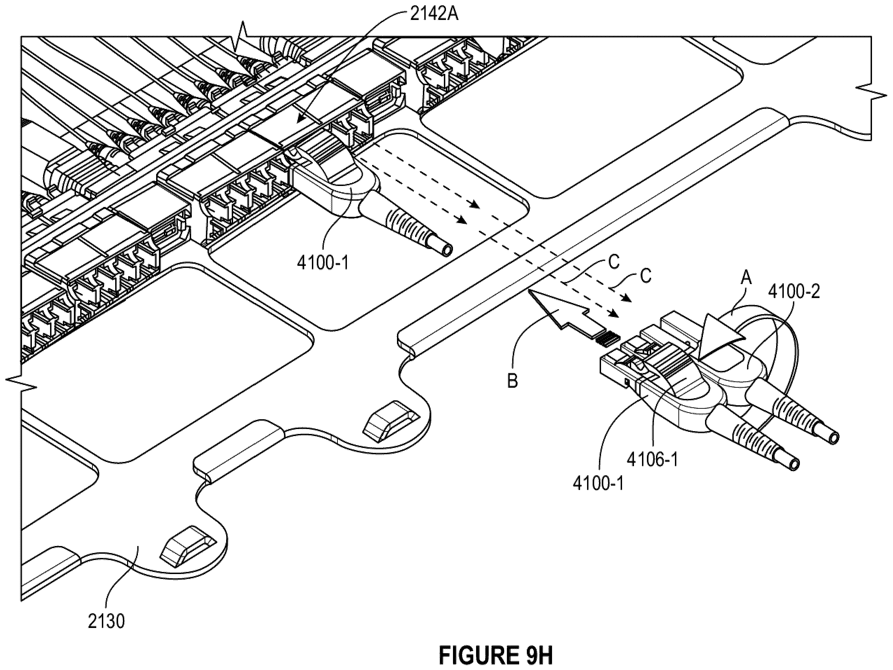

As shown in the example of FIGURE 9H, when one or more of the dual polarity LC adapter modules 2142A is mounted to a tray, such as tray 2130, this can provide for easy assembly of incoming fiber optic cables and fiber optic connectors. Fiber optic connector 4100-1 and fiber optic connector 4100-2 are identical connectors both of which may be similar to connectors shown in FIG. 9G. The only difference between fiber optic connector 4100-1 and fiber optic connector 4100-2 is the orientation of fiber optic connectors 4100-1, 4100-2 in this view. As shown, fiber optic connector 4100-1 has latch 4106-1 facing upward and fiber optic connector 4100-2 has a latch facing downward that is not visible in this view. If fiber optic connector 4100-2 is rotated 180 degrees in the direction shown by arrow A, it will appear identical to fiber optic connector 4100-1.

Fiber optic connector 4100-1 is schematically illustrated being inserted into LC adapter module 2142A in the direction shown by arrow B. Fiber optic connector 4100-2 is shown being pulled out of LC adapter module 2142A in the direction shown by arrows C. The dual polarity LC adapter module 2142A allows for easy assembly of fiber optic connector 4100A-1 and 4100A-2, as fiber optic connectors 4100A-1, 4100A-2 can be easily oriented regardless of the position of the poles of the LC adapter module. This allows for easy assembly of fiber optic cables regardless of the polarity of the LC adapter module 2142A.

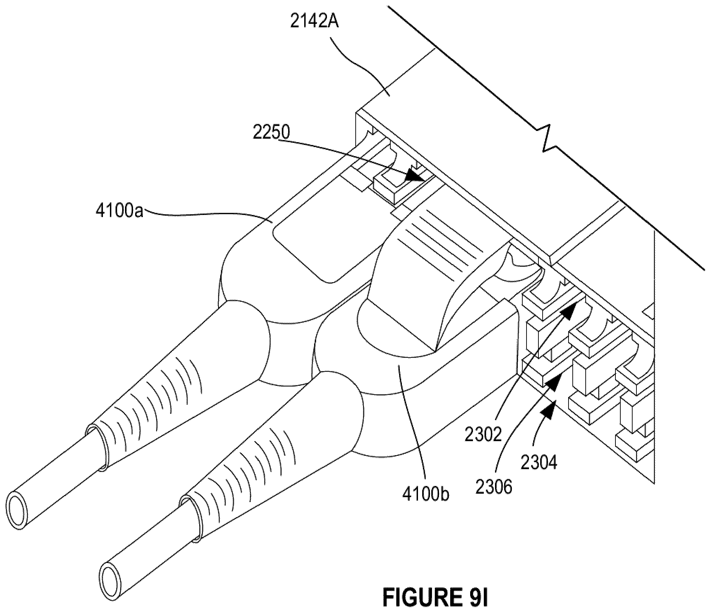

FIGURE 9I further depicts an example of two fiber optical connectors 4100a, 4100b with dual polarity configurations arranged side-by-side and connected to adapter module 2142A, which has been removed from the tray to allow for an enlarged view. As both the first and the second slots 2302, 2304 of LD adapter module 2142A are defined in the adapter 2250, the two fiber optic connectors 4100a, 4100b with different polarity, such as the first fiber optic connector 4100a with the latch 4106 positioned upward from the housing and the second fiber optic connector 4100b with the latch 4106 positioned downward from the housing, may be both engaged in the adapter module 2142A through the first slot 2302 and the second slot 2304 formed in the adapter 2250.

Thus, by configuring the connector connection port 2142A with the first slot 2302 and the second slot 2304 formed adjacent to or connected to the center slot 2306, the fiber optic connector 4100 with different polarity configurations may be easily installed and inserted into the adapter 2250 without additional direction changes, orientation alternation, or rotation flip either to the fiber optical connector or to the adapter. When the fiber optical connector 4100 is flipped oppositely for polarity change, the two additional slots, such as the first and second slots 2302, 2304, formed laterally to the center slot 2306, may accommodate different orientations and geometrical configurations of the fiber optic connector 4100. This can help to further reduce the labor and cost for fiber optic management, along with the footprint required to position adapters with different polarity configurations.

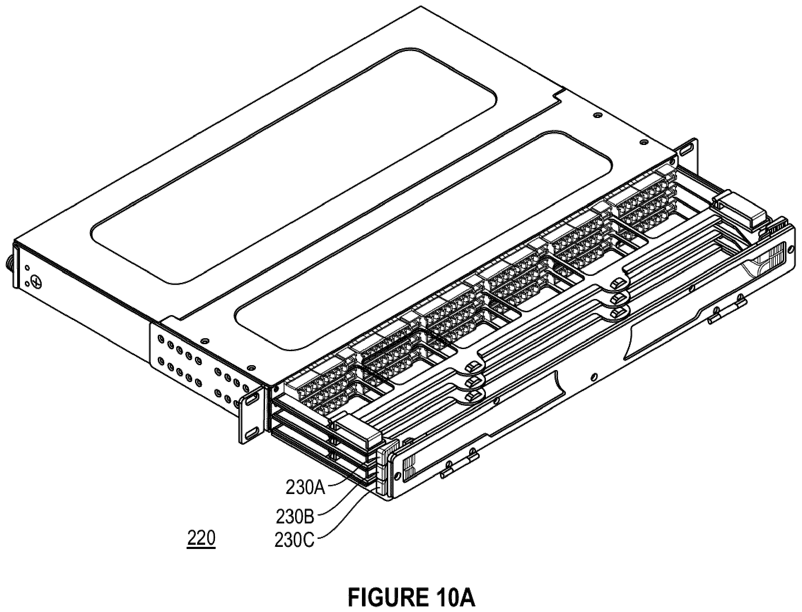

FIGURES 10A-10D illustrate another example patch panel assembly 220 that can be incorporated into a server rack of a fiber optic cable management system. The patch panel assembly 220 is similar to the panel assembly 120 previously discussed, except that it is a 1 RU assembly that only includes a first tray 230A, a second tray 230B, and a third tray 230C (also collectively "trays 230A-230C") that are vertically stacked one on top of the other. Since it is a 1RU, the patch panel assembly 220 includes trays that are vertically stacked on top of the other. The panel assembly 220 is half the size of the patch panel assembly 120, but otherwise the configuration of patch panel assembly 220 is identical to the configuration of patch panel assembly 120. Each of the trays 230A-230C are individually movable relative to one another, and capable of moving within the housing. Each of the trays 230A-230C can include identical components as the trays 130A-130F in FIGURES 1-9I and a detailed discussion will not be provided herein for brevity, but it is to be appreciated that the discussion of the trays 130A-130F and the components thereon in FIGURES 1-9I is otherwise applicable here. For example, each tray will include module assemblies that include two LC adapter modules and a directly adjacent MPO adapter module. Additionally, the LC adapter modules may include dual polarity LC adapters ports configured to receive a dual polarity connector of a fiber optic cable.

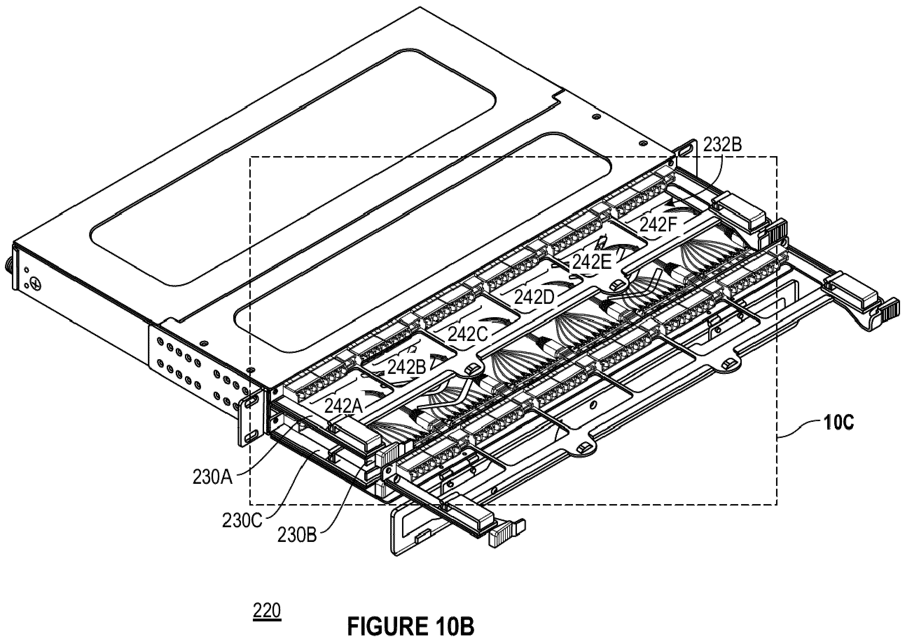

FIGURES 10B-10C illustrate the second tray 230B pulled outwards from the panel assembly 220 to expose a rear support portion 232B of the tray 230B which supports the cable assemblies 266G. Six fiber optic module assemblies 240G, 240H, 2401, 240J, 240K, 240L (also collectively referred to herein as "module assemblies 240G-240L") are provided on the second tray 230B. Each of the fiber optic module assemblies 240G-240L further includes two (2) LC adapter modules and an abutting MPO adapter module. For example, as shown, module assembly 240G includes a first LC adapter module 242G, a second LC adapter module 242G-1, and an abutting MPO module 260G. A cable assembly 266G may have an MPO connector 268G at one end coupled to the MPO module 260G and LC connectors 270G at the other ends coupled to respective LC adapter modules 242G, 242H-L. Cable assemblies may be provided on the tray for each of the remaining module assemblies 240H-240L.

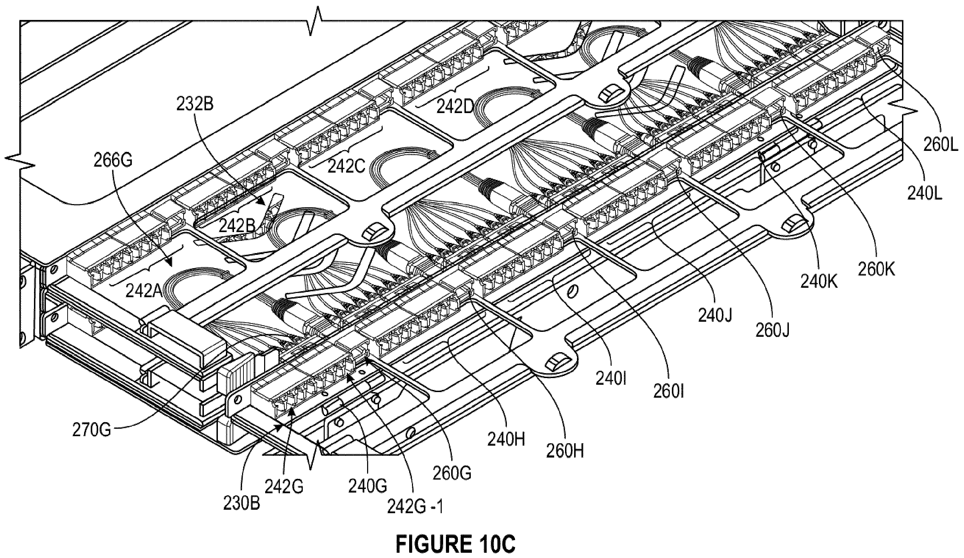

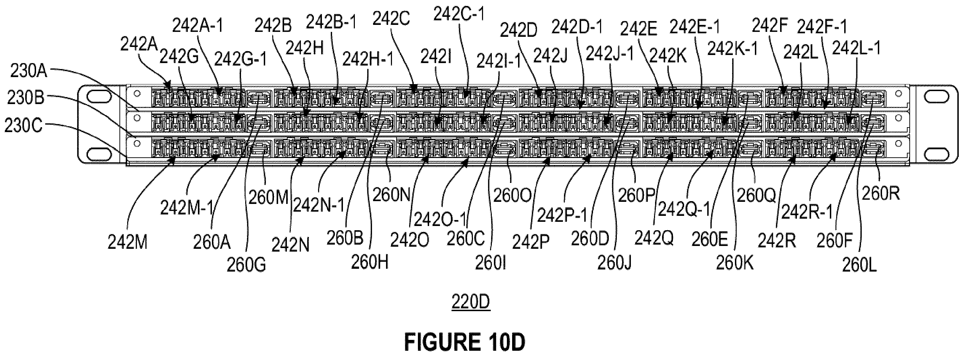

As shown in FIGURE 10D, a front view of the ports in the patch panel assembly have a similar arrangement as the ports described with regard to FIGURE 8A, except that panel assembly 220 includes 144 ports, which is one half the number of ports as panel assembly 120. The modules may include all of the features discussed with FIGURES 3A-3B and 4A-4B. It is to be appreciated that when discussing LC adapter modules and MPO adapter modules in this and as in embodiment described herein, LC adapter ports and MPO ports are included, along with all other features previously discussed. As in the previous examples, the first tray 230A will include six module assemblies 240A-240F (FIGURE 10B) that further include respective LC adapter modules 242A, 242A-1, 242B, 242B-1, 242C, 242C-1, 242D, 242D-1, 242E, 242E-1, 242F, 242F-1, as well as respective MPO modules 260A, 260B, 260C, 260D, 260E, 260F. The second tray 230B, as noted above, includes fiber optic module assemblies 240G-240L (FIGURE 10C), each respectively having two LC adapter modules 242G, 242G-1, 242H, 242H-1, 2421, 2421-1, 242J, 242J-1, 242K, 242K-1, 242L, 242L-1 and six respective MPO modules 260G, 260H, 2601, 260J, 260K, 260L (FIGURE 10C). Lastly, the third tray 230C includes fiber optic module assemblies (not numbered for ease of illustration), each respectively having two LC adapter modules 242M, 242M-1, 242N, 242N-1, 242O, 2420-1, 242P, 242P-1, 242Q, 242Q-1, 242R, 242R-1 and six MPO modules 260M, 260N, 2600, 260P, 260Q, 260R.

In this arrangement, the ports of one tray will be aligned with the parts of another tray. The six MPO modules 260A-F coupled to the first tray 230A are respectively aligned with the six MPO modules 260G-L coupled to the second tray 230B, which are, in turn, respectively aligned with the six MPO modules 260M-R coupled to the third tray 230C. MPO module 260A and corresponding MPO port of the first tray 230A can be positioned between directly adjacent LC module 242A-1 of the first module assembly 240A and LC module 242B of the second module assembly 240B. Similarly, each of the MPO modules 260B-260R (including their respective ports) in the patch panel assembly 220 may be positioned between two LC ports of two LC modules of two directly adjacent fiber optic module assemblies. In this arrangement, all of the LC connector ports and MPO connector ports coupled to the first tray 230A are vertically aligned with the LC connector ports and MPO connector ports of the other trays in the patch panel assembly 220, and particularly the second tray 230B and third tray 230C.

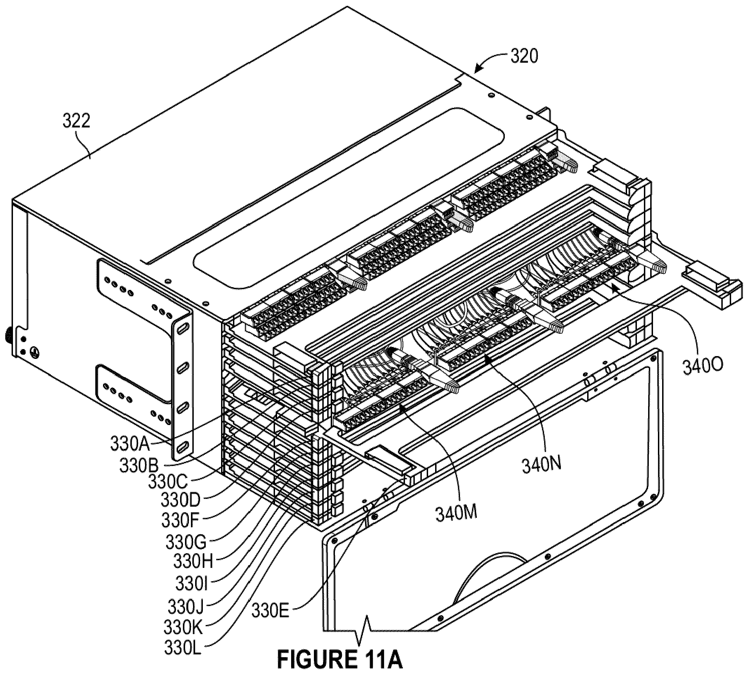

FIGURES 11A-11C illustrate another example fiber optic patch panel assembly 320 that can be incorporated into a server rack of a fiber optic cable management system. The panel assembly 320 is a 4 RU assembly that includes 12 trays: a first tray 330A, a second tray 330B, a third tray 330C, a fourth tray 330D, a fifth tray 330E, a sixth tray 330F, a seventh tray 330G, an eighth tray 330H, a ninth tray 3301, a tenth tray 330J, an eleventh tray 330K, and a twelfth tray 330L (also collectively "trays 330A-330L"). While each of the trays 330A-330L includes fiber optic module assemblies including LC adapter modules and MPO adapter modules that are structurally identical to the LC adapter modules and MPO modules discussed with regard to FIGURES 3A-3B, the configuration of the LC adapter modules and MPO adapter modules that form the fiber optic module assemblies on the trays 330A-330L may differ.

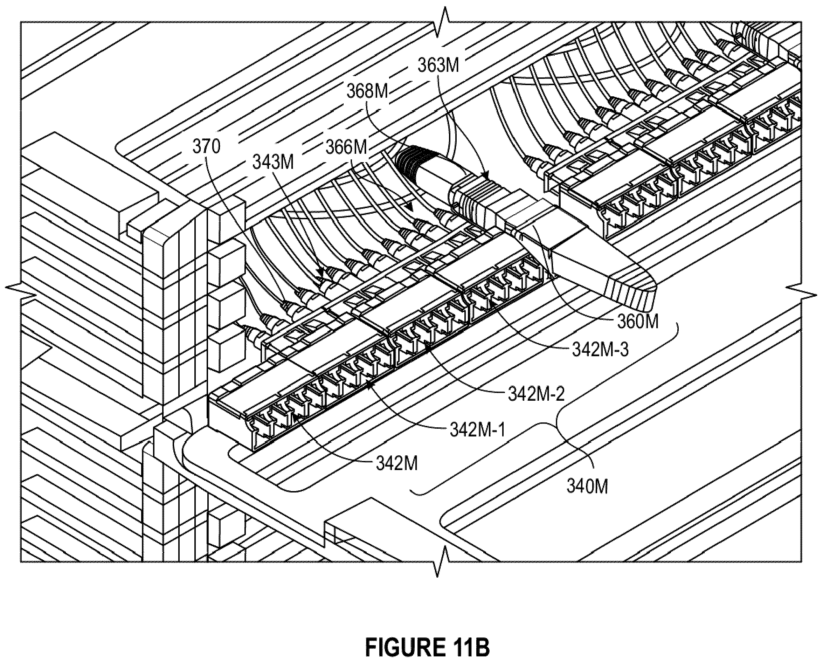

FIGURE 11A shows tray 330E pulled forward out of the panel assembly housing 322. As shown, tray 330E includes three fiber optic module assemblies: a first fiber optic module assembly 340M, a second fiber optic module assembly 340N, and a third fiber optic module assembly 340O (also collectively referred to herein as "module assemblies 340M-340O"). This configuration may accommodate an MPO16 breakout cable assembly, or a cable assembly with an MPO connector at one end that breaks out into sixteen individual LC connectors. Each module assembly 340M-340O can be configured to include four LC adapter modules, with each LC adapter module at its front end including four ports for a total of sixteen ports, and an MPO adapter module that has a single port. For example, as shown in the enlarged view of FIGURE 11B, which better illustrates the first adapter module assembly 340M on tray 330E, the module assembly 340M includes a first LC adapter module 342M, a second LC adapter module 342M-1, a third LC adapter module 342M-2, and a fourth LC adapter module 342M-3, each of which is configured to include four adapter ports. This same arrangement can be provided for each of the module assemblies 340N and 340O on the tray 330E. Additionally, each of the remaining trays 330A-330D and trays 330F-330L may include the same number of fiber optic module assemblies, LC adapter modules, and MPO adapter modules as tray 330E. Each of the LC adapter modules, including LC adapter modules 342M through 342M-3 in the panel assembly 320 can be identical in structure to the LC adapter module described with regard to FIGURES 3A-3B. Similarly, MPO adapter modules in the panel assembly 320, including MPO module 360M, can be similar to the MPO module described with regard to FIGURES 4A-4B. The LC adapter modules and the MPO modules of this example are not further discussed in detail here for brevity. In other examples and/or to accommodate other types of MPO cable assemblies, the fiber optic module assembly can be further modified to accommodate any number or types of LC ports that may be required.

Cable assembly 366M may be connected to a rear 343M of the fiber optic module assembly 340M. Cable assembly 366M includes the MPO connector 368M connected to the port 362M (not visible) at the rear 363M of the MPO module 360M, as well as sixteen LC connectors 370 respectively connected to the ports (not visible) at the rear 343M of the LC modules 342M, 342M-1, 342M-2, 342M-3. As in the previous examples, the arrangement of the LC adapter modules (including their respective LC ports), directly adjacent the MPO modules 360 (including their respective MPO ports) allows for the cable assembly 366M to be arranged in a configuration that is easily accessible and without resulting in cord entanglements and the like.

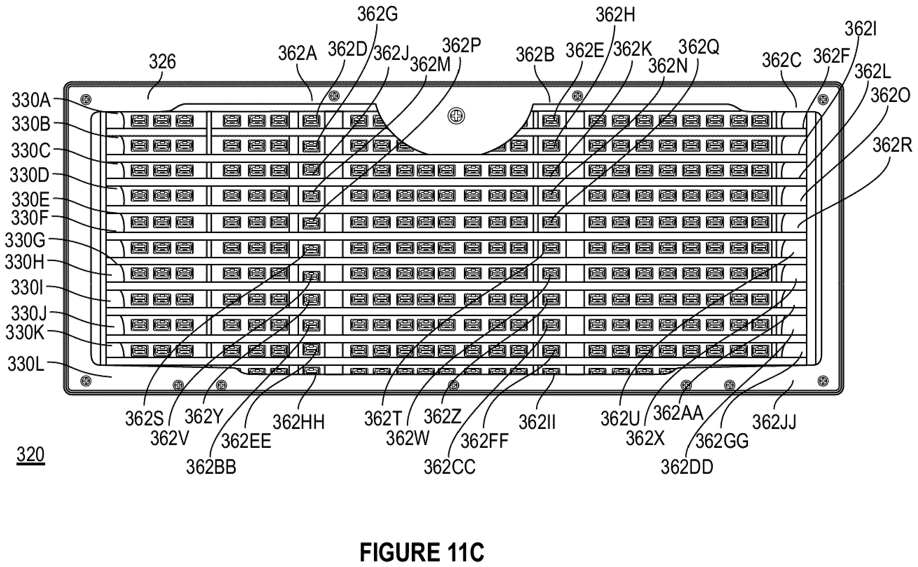

FIGURE 11C illustrates a front view of the panel assembly 320 that shows the arrangement of ports through the door 326 of the patch panel assembly 320 that are configured to receive incoming fiber optic cables. This view illustrates the alignment of the ports in the panel assembly 320. Some of the ports may be hidden by the door 326, but are otherwise labeled and understood to be directly behind the door. For example, the MPO ports on one tray are aligned with MPO parts on another tray, such that each of the three MPO ports 362A-362C on the first tray 330A, are aligned with MPO ports on the remaining trays 330B-330L. In this arrangement, MPO port 362A of the first tray 330A is aligned with ports 362D, 362G, 362J, 362M, 362P, 362S, 362V, 362Y, 362BB, 362EE, 362HH of respective trays 330B-330L; MPO port 362B of the first tray 330A is aligned with ports 362E, 362H, 362K, 362N, 362Q, 362T, 362W, 362Z, 362CC, 362FF, 362II of respective trays 330B-330L; and MPO port 362C of the first tray 330A is aligned with ports 362F, 3621, 362L, 362O, 362R, 362U, 362X, 362AA, 362DD, 362GG, 362JJ of respective trays 330B-330L. Similarly, all of the LC ports on the first tray 330A are aligned with the LC ports of the other trays 330B-330L.

The fiber optic panel assemblies disclosed herein include trays configured to pull out multiple fiber optic module simultaneously so that a technician or an operator may visually identify and locate the target connector or cable in the fiber optic module assembly efficiently and quickly with minimum search time. As the fiber optic modules are disposed laterally adjacent one another or side-by-side in a closely packed arrangement, effective utilization of the space defined in the fiber optic module assembly may be obtained. Further, in examples where the modules are dual polarity modules, such as the LC adapter modules discussed herein, it allows for easy installation of incoming fiber optic cables. Thus, the fiber optic module assembly disclosed herein provides for a high density patch panel, ease and quick access to the fiber optic equipment on the tray, and a small footprint for desired cable and connector management and organization.

According to an aspect of the disclosure, a patch panel assembly includes an outer housing, a fiber optic equipment tray, and at least one fiber optic module assembly. The outer housing may have a main body and an interior chamber. The fiber optic equipment tray may be movable relative to the main body and the tray may have a support surface. At least one fiber optic module assembly may be coupled to the support surface. The at least one fiber optic module assembly may further include a first plurality of fiber optic adapter ports configured to receive corresponding first connectors of a cable assembly. A second fiber optic adapter port may be configured to receive a second connector of the cable assembly. The second fiber optic adapter port may be positioned adjacent the first plurality of fiber optic adapter ports and may be different than the first plurality of fiber optic adapter ports. The first plurality of fiber optic adapter ports and the second fiber optic adapter port are aligned with one another along a single plane; and/or
each of the first plurality of fiber optic adapter parts is configured to receive a lucent connector ("LC") connector, and the second fiber optic adapter port is configured to receive a multi-fiber push-on ("MPO") connector; and/or
the first plurality of fiber optic adapter ports and the second fiber optic adapter port are aligned with one another along a horizontal plane; and/or
the first plurality of fiber optic adapter ports is eight ports, and the second fiber optic adapter port is a single port, and the first plurality of fiber optic adapter ports and the second fiber optic adapter port are configured to couple with an MPO8 cable; and/or
the fiber optic module assembly further comprises a first LC adapter module and a second LC adapter module that collectively house the fiber optic adapter ports, wherein the first and second LC adapter modules each comprise a housing with a top wall, a bottom wall, and exterior side walls collectively forming an interior space, and wherein interior side walls within the interior space form four LC adapter ports, such that the first and second LC adapter modules collectively house eight LC adapter ports that are configured to receive eight LC connectors; and/or
the at least one fiber optic module assembly comprises six fiber optic module assemblies extending across a width of the fiber optic equipment tray and coupled to the fiber optic equipment tray; and/or
the first plurality of fiber optic adapter ports is sixteen ports, and the second fiber optic adapter port is a single port, and the first plurality of fiber optic adapter ports and the second fiber optic adapter port are configured to couple with an MPO16 cable; and/or
the fiber optic module assembly further comprises a first LC adapter module, a second LC adapter module, a third LC adapter module, and a fourth LC adapter module. The first, second, third, and fourth LC adapter modules collectively house the first plurality of fiber optic adapter ports. The first, second, third, and fourth LC adapter modules may each comprise a housing with a top wall, a bottom wall, and exterior side walls forming an interior space. The interior side walls within the interior space form four LC adapter ports within the interior space, such that the first, second, third, and fourth LC adapter modules collectively house sixteen LC adapter ports that are configured to receive sixteen LC connectors; and/or
the fiber optic module assembly is a first fiber optic module assembly, and the cable assembly is a first cable assembly. The patch panel assembly further includes a second fiber optic module assembly, and the second fiber optic module assembly further comprises a third plurality of fiber optic adapter ports and a further fiber optic adapter port. The third plurality of fiber optic adapter ports may be configured to receive corresponding third connectors of a second cable assembly and the plurality of first fiber optic adapter ports may be arranged in a single row. A fourth fiber optic adapter port may be positioned directly adjacent the third plurality of fiber optic adapter parts. The fourth fiber optic adapter port may be different than the third plurality of fiber optic adapter ports. The fourth fiber optic adapter port may be configured to receive a fourth connector of the second cable assembly. The third plurality of fiber optic adapter ports and the fourth fiber optic adapter port may be aligned with one another in a single row and aligned with first fiber optic module assembly; and/or
the first plurality of first fiber optic ports are dual polarity fiber optic ports; and/or
the third plurality of adapter parts are configured to each receive an LC connector, and the fourth adapter part is configured to receive an MPO connector; and/or
the fiber optic equipment tray is a first fiber optic equipment tray and the fiber optic module assembly is a first fiber optic equipment module assembly, and the patch panel assembly further includes a second fiber optic equipment tray and a second fiber optic module assembly coupled to the second fiber optic equipment tray. The second fiber optic equipment tray may be movable relative to the main body, and the first tray and the second tray may each have a support surface. The second fiber optic module assembly may further include a third plurality of fiber optic adapter ports and a fourth fiber optic adapter port abutting the third plurality of adapter ports. The third plurality of fiber optic adapter ports may be configured to receive corresponding third connectors of a second cable assembly. The plurality of third fiber optic adapter ports may be arranged in a single row. The fourth fiber optic adapter port is different than the third plurality of fiber optic adapter ports, and configured to receive a fourth connector of the second cable assembly that is different than the third connectors. The third plurality of fiber optic adapter ports and the fourth fiber optic adapter port are aligned with one another along a same horizontal plane. The second and fourth fiber optic adapter parts are vertically aligned with one another; and/or
the first and third pluralities of fiber optic adapter parts are vertically aligned with one another; and/or
each of the first plurality of fiber optic adapter ports and the third plurality of fiber optic adapter parts are configured to receive a lucent connector ("LC") connector, and the second fiber optic adapter port and the fourth fiber optic adapter port are configured to receive a multi-fiber push-on ("MPO") connector; and/or
the fiber optic equipment tray is a first fiber optic equipment tray, and the assembly further includes a third fiber optic equipment tray may be movable relative to the main body and the first equipment tray and the second equipment tray. A third fiber optic module assembly may be coupled to the third fiber optic equipment tray. The third fiber optic module assembly may include a fifth plurality of fiber optic adapter ports and a sixth fiber optic adapter port abutting the fifth plurality of adapter ports. The fifth plurality of fiber optic adapter ports may be configured to receive corresponding fifth connectors of a third cable assembly. The sixth fiber optic adapter port may be different than the fifth plurality of adapter ports and configured to receive a sixth connector of the third cable assembly that is different than the fifth connectors. A height of an arrangement of the first fiber optic equipment tray, the second fiber optic equipment tray, and the third fiber optic equipment tray on a data rack may be equal to one rack unit; and/or
a fourth fiber optic equipment tray is movable relative to the main body and the first fiber optic equipment tray, the second fiber optic equipment tray and the third fiber optic equipment hay. A fourth fiber optic module assembly is coupled to the fourth fiber optic equipment tray. The fourth fiber optic module assembly includes a seventh plurality of fiber optic adapter parts and an eight fiber optic adapter port. The seventh plurality of fiber optic adapter ports are configured to receive corresponding seventh connectors of a fourth cable assembly; and an eighth fiber optic adapter port. The eighth fiber optic adapter ports abuts the seventh plurality of fiber optic adapter ports. The eighth fiber optic adapter port is different than the seventh plurality of fiber optic adapter ports and configured to receive an eighth connector of the fourth cable assembly that is different than the seventh connectors. A fifth fiber optic equipment tray is movable relative to the main body and the first, second, third, and fourth fiber optic equipment trays. A fifth fiber optic module assembly may be coupled to the fifth fiber optic equipment tray. The fifth fiber optic module assembly may include a ninth plurality of fiber optic adapter ports configured to receive corresponding ninth connectors of a fifth cable assembly. A tenth fiber optic adapter port may abut the ninth plurality of fiber optic adapter ports. The tenth fiber optic adapter port is different than the ninth plurality of fiber optic adapter parts and is configured to receive a tenth connector of the fifth cable assembly that is different than the ninth connectors. A sixth fiber optic equipment tray may be movable relative to the main body and the first, second, third, fourth and fifth fiber optic equipment trays. A sixth fiber optic module assembly coupled to the sixth fiber optic equipment tray, the sixth fiber optic module assembly including an eleventh plurality of fiber optic adapter ports configured to receive corresponding eleventh connectors of a sixth cable assembly. A twelfth fiber optic adapter port may abut the eleventh plurality of fiber adapter ports. The twelfth fiber optic adapter port is different than the eleventh plurality of fiber optic adapter ports and configured to receive a twelfth connector of the sixth cable assembly that is different than the eleventh connectors. A height of an arrangement of the fourth fiber optic equipment tray, the fifth fiber optic equipment tray, and the sixth fiber optic equipment tray on the data rack is equal to one rack unit. An overall height of the arrangement of the first, second, third, fourth, fifth, and sixth fiber optic equipment trays on a data rack is equal to 2 RU; and/or
the plurality of first, third, fifth, seventh ninth, and eleventh adaptor ports are configured to receive lucent connectors ("LC connectors"), and wherein the second, fourth, sixth, eight, tenth, and twelfth fiber optic adapters are configured to receive multi push on ("MPO") connectors, and wherein the patch panel assembly is configured to receive a total of 288 LC connectors and 36 MPO connectors; and/or
one rack unit is equal to a height 1.75 inches.

According to another aspect of the disclosure, a fiber optic cable system for a fiber optic patch panel assembly may include an outer housing, a first fiber optic equipment tray, a second fiber optic equipment tray, a first module assembly, a first cable assembly, and a second cable assembly. The outer housing may have a main body and an interior chamber. The first fiber optic equipment tray may be movable relative to the main body and have a first support surface. The second fiber optic equipment tray may be movable relative to the main body and have a second support surface. The first module assembly may be coupled to the first fiber optic equipment tray. The first cable assembly may be coupled to the first module assembly and have a first plurality of connectors at one end of the first cable assembly and a second connector at the opposite end of the first cable assembly. The first plurality of connectors and the second connector may be different. The second module assembly may be coupled to the second fiber optic equipment tray. The second cable assembly may be coupled to the second module assembly and have a third plurality of connectors at one end and a fourth connector at the opposite end of the second cable assembly. The third plurality of connectors and the fourth connector may be different. The first module assembly may further comprise a first plurality of fiber optic adapter ports configured to receive corresponding first connectors of the first cable assembly. A second fiber optic adapter port may be configured to receive the second connector of the first cable assembly. The second fiber optic adapter port may abut the first plurality of fiber optic adapter ports. The first plurality of fiber optic adapter ports and the second fiber optic adapter port may extend along a same plane as the first support surface. The second module assembly may further comprise a third plurality of fiber optic adapter ports configured to receive corresponding third connectors of the second cable assembly and a fourth fiber optic adapter port configured to receive the fourth connector of the second cable assembly. The fourth fiber optic adapter port may abut the third plurality of fiber optic adapter ports. The third plurality of fiber optic ports and the fourth fiber optic adapter port may extend along a same plane as the second support surface. The first module assembly and the second module assembly may be vertically aligned with one another; and/or
the first and third pluralities of connectors may include lucent connectors, and the second and fourth connectors may include multi-fiber push-on connectors; and/or
the first and third pluralities of connectors are vertically aligned with one another, and the second and fourth connectors are vertically aligned with one another; and/or
movement of the first equipment tray through a front of the outer housing of the patch panel assembly exposes the support surface and the first cable assembly at a rear of the tray; and/or
the first plurality of fiber optic adapter ports are dual polarity ports.

According to another aspect of the disclosure, a patch panel assembly may include a plurality of fiber optic equipment trays, a plurality of lucent connector ("LC") adapter ports, and a plurality of multi-fiber push-on ("MPO") adapter ports. Each of the plurality of fiber optic equipment trays may be movable relative to one another. Each of the plurality of fiber optic equipment trays may be coupled with some of the plurality of the LC adapter ports. At least one MPO adapter port of the plurality of MPO adapter ports may be coupled to each tray and positioned directly adjacent to the some of the plurality of LC ports coupled to each of the plurality of fiber optic equipment trays. Some of the LC adapter parts and the at least one MPO adapter port on each tray may be positioned in a single row across a width of the tray; and/or
the plurality of fiber optic equipment trays includes at least two fiber optic equipment trays vertically aligned with one another. Some of the plurality of LC adapter ports and the at least one MPO adapter port are coupled to a first tray of the at least two fiber optic equipment trays and arranged to vertically align with the some of the LC adapter ports and the at least one MPO adapter port coupled to a second fiber optic equipment tray of the at least two fiber optic equipment hays; and/or
the LC adapter ports are dual polarity adapter ports.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only one of many possible implementations. Further, the same or similar reference numbers in different drawings can identify the same or similar elements.

## Claims

1. A patch panel assembly comprising:
an outer housing having a main body and an interior chamber;
a fiber optic equipment tray being movable relative to the main body, the fiber optic equipment tray having a support surface; and
at least one fiber optic module assembly coupled to the support surface, the at least one fiber optic module assembly comprising:
a first plurality of fiber optic adapter ports configured to receive corresponding first connectors of a cable assembly; and
a second fiber optic adapter port configured to receive a second connector of the cable assembly, the second fiber optic adapter port positioned adjacent the first plurality of fiber optic adapter ports and being different than the first plurality of fiber optic adapter ports,
wherein the first plurality of fiber optic adapter ports and the second fiber optic adapter port are aligned with one another along a single plane.

2. The patch panel assembly of claim 1, wherein each of the first plurality of fiber optic adapter ports is configured to receive a lucent connector ("LC") connector, and the second fiber optic adapter port is configured to receive a multi-fiber push-on ("MPO") connector.

3. The patch panel assembly of claim 2, wherein the first plurality of fiber optic adapter ports and the second fiber optic adapter port are aligned with one another along a horizontal plane; and/or
wherein the first plurality of fiber optic adapter ports is eight ports, and the second fiber optic adapter port is a single port, and the first plurality of fiber optic adapter ports and the second fiber optic adapter port are configured to couple with an MPO8 cable.

4. The patch panel assembly of claim 3, wherein the fiber optic module assembly further comprises a first LC adapter module and a second LC adapter module that collectively house the fiber optic adapter ports,
wherein the first and second LC adapter modules each comprise a housing with a top wall, a bottom wall, and exterior side walls collectively forming an interior space, and wherein interior side walls within the interior space form four LC adapter ports, such that the first and second LC adapter modules collectively house eight LC adapter ports that are configured to receive eight LC connectors; and
wherein optionally the at least one fiber optic module assembly comprises six fiber optic module assemblies extending across a width of the fiber optic equipment tray and coupled to the fiber optic equipment tray.

5. The patch panel assembly of claim 3, wherein the first plurality of fiber optic adapter ports is sixteen ports, and the second fiber optic adapter port is a single port, and the first plurality of fiber optic adapter parts and the second fiber optic adapter port are configured to couple with an MPO16 cable; and
wherein optionally the fiber optic module assembly further comprises a first LC adapter module, a second LC adapter module, a third LC adapter module, and a fourth LC adapter module, the first, second, third, and fourth LC adapter modules collectively housing the first plurality of fiber optic adapter ports, wherein the first, second, third, and fourth LC adapter modules each comprise a housing with a top wall, a bottom wall, and exterior side walls forming an interior space, and wherein interior side walls within the interior space form four LC adapter ports within the interior space, such that the first, second, third, and fourth LC adapter modules collectively house sixteen LC adapter ports that are configured to receive sixteen LC connectors.

6. The patch panel assembly of one of claims 1 to 5, wherein the fiber optic module assembly is a first fiber optic module assembly, and the cable assembly is a first cable assembly, the patch panel assembly further comprising a second fiber optic module assembly, the second fiber optic module assembly comprising:
a third plurality of fiber optic adapter ports configured to receive corresponding third connectors of a second cable assembly, the plurality of first fiber optic adapter parts being arranged in a single row; and
a fourth fiber optic adapter port positioned directly adjacent the third plurality of fiber optic adapter ports, the fourth fiber optic adapter port being different than the third plurality of fiber optic adapter ports, the fourth fiber optic adapter port being configured to receive a fourth connector of the second cable assembly,
wherein the third plurality of fiber optic adapter ports and the fourth fiber optic adapter port are aligned with one another in a single row and aligned with first fiber optic module assembly.

7. The patch panel assembly of one of claims 1 to 6, wherein the first plurality of first fiber optic ports are dual polarity fiber optic ports.

8. The patch panel assembly of one of claims 1 to 7, wherein the fiber optic equipment tray is a first fiber optic equipment tray and the fiber optic module assembly is a first fiber optic module assembly, and the patch panel assembly further comprises:
a second fiber optic equipment tray being movable relative to the main body and the first tray, the second fiber optic equipment tray having a support surface; and
a second fiber optic module assembly coupled to the second fiber optic equipment tray, the second fiber optic module assembly comprising:
a third plurality of fiber optic adapter ports configured to receive corresponding third connectors of a second cable assembly, the plurality of third fiber optic adapter ports being arranged in a single row; and
a fourth fiber optic adapter port abutting the third plurality of fiber optic adapter ports, the fourth fiber optic adapter port being different than the third plurality of fiber optic adapter ports and configured to receive a fourth connector of the second cable assembly that is different than the third connectors,
wherein the third plurality of fiber optic adapter ports and the fourth fiber optic adapter port are aligned with one another along a same horizontal plane, and
wherein the second and fourth fiber optic adapter ports are vertically aligned with one another.

9. The patch panel assembly of claim 8, wherein each of the first plurality of fiber optic adapter ports and the third plurality of fiber optic adapter ports are configured to receive a lucent connector ("LC") connector, and the second fiber optic adapter port and the fourth fiber optic adapter part are configured to receive a multi-fiber push-on ("MPO") connector.

10. The patch panel assembly of claim 8 or 9, wherein the fiber optic equipment tray is a first fiber optic equipment tray, the assembly further comprising:
a third fiber optic equipment tray being movable relative to the main body and the first fiber optic equipment tray and the second fiber optic equipment tray; and
a third fiber optic module assembly coupled to the third fiber optic equipment tray, the third fiber optic module assembly comprising:
a fifth plurality of fiber optic adapter ports configured to receive corresponding fifth connectors of a third cable assembly; and
a sixth fiber optic adapter port abutting the fifth plurality of fiber optic adapter ports, the sixth fiber optic adapter port being different than the fifth plurality of fiber optic adapter ports and configured to receive a sixth connector of the third cable assembly that is different than the fifth connectors,
wherein a height of an arrangement of the first fiber optic equipment tray, the second fiber optic equipment tray, and the third fiber optic equipment tray on a data rack is equal to one rack unit.

11. The patch panel assembly of claim 10, further comprising:
a fourth fiber optic equipment tray being movable relative to the main body and the first fiber optic equipment tray, the second fiber optic equipment tray, and the third fiber optic equipment tray;
a fourth fiber optic module assembly coupled to the fourth fiber optic equipment tray, the fourth fiber optic module assembly comprising:
a seventh plurality of fiber optic adapter ports configured to receive corresponding seventh connectors of a fourth cable assembly; and
an eighth fiber optic adapter port abutting the seventh plurality of fiber optic adapter ports, the eighth fiber optic adapter port being different than the seventh plurality of fiber optic adapter ports and configured to receive an eighth connector of the fourth cable assembly that is different than the seventh connectors,
a fifth fiber optic equipment tray being movable relative to the main body and the first, second, third, and fourth fiber optic equipment trays;
a fifth fiber optic module assembly coupled to the fifth fiber optic equipment tray, the fifth fiber optic module assembly comprising:
a ninth plurality of fiber optic adapter ports configured to receive corresponding ninth connectors of a fifth cable assembly; and
a tenth fiber optic adapter part abutting the ninth plurality of fiber optic adapter ports, the tenth fiber optic adapter port being different than the ninth plurality of fiber optic adapter ports, the tenth fiber optic adapter port being configured to receive a tenth connector of the fifth cable assembly that is different than the ninth connectors,
a sixth fiber optic equipment tray being movable relative to the main body and the first, second, third, fourth and fifth fiber optic equipment trays; and
a sixth fiber optic module assembly coupled to the sixth fiber optic equipment tray, the sixth fiber optic module assembly comprising:
an eleventh plurality of fiber optic adapter ports configured to receive corresponding eleventh connectors of a sixth cable assembly; and
a twelfth fiber optic adapter port abutting the eleventh plurality of fiber adapter ports, the twelfth fiber optic adapter port being different than the eleventh plurality of fiber optic adapter ports and configured to receive a twelfth connector of the sixth cable assembly that is different than the eleventh connectors,
wherein a height of an arrangement of the fourth fiber optic equipment tray, the fifth fiber optic equipment hay, and the sixth fiber optic equipment tray on the data rack is equal to one rack unit, such that an overall height of the arrangement of the first, second, third, fourth, fifth, and sixth fiber optic equipment hays on a data rack is equal to 2 RU; and
wherein optionally the plurality of first, third, fifth, seventh ninth, and eleventh adaptor ports are configured to receive lucent connectors ("LC connectors"), and wherein the second, fourth, sixth, eight, tenth, and twelfth fiber optic adapters are configured to receive multi push on ("MPO") connectors, and wherein the patch panel assembly is configured to receive a total of 288 LC connectors and 36 MPO connectors.

12. A fiber optic cable system for a fiber optic patch panel assembly comprising:
an outer housing having a main body and an interior chamber;
a first fiber optic equipment tray being movable relative to the main body and having a first support surface;
a second fiber optic equipment tray being movable relative to the main body and having a second support surface;
a first module assembly coupled to the first fiber optic equipment tray;
a first cable assembly coupled to the first module assembly and having a first plurality of connectors at one end of the first cable assembly and a second connector at the opposite end of the first cable assembly, the first plurality of connectors and the second connector being different;
a second module assembly coupled to the second fiber optic equipment tray; and
a second cable assembly coupled to the second module assembly and having a third plurality of connectors at one end of the second cable assembly and a fourth connector at the opposite end of the second cable assembly, the third plurality of connectors and the fourth connector being different,
wherein the first module assembly further comprises a first plurality of fiber optic adapter ports configured to receive corresponding first connectors of the first cable assembly, and a second fiber optic adapter port configured to receive the second connector of the first cable assembly, the second fiber optic adapter port abutting the first plurality of fiber optic adapter ports, the first plurality of ports and the second fiber optic adapter port extending along a same plane as the first support surface, and
wherein the second module assembly further comprises a third plurality of fiber optic adapter ports configured to receive corresponding third connectors of the second cable assembly and a fourth fiber optic adapter port configured to receive the fourth connector of the second cable assembly, the fourth fiber optic adapter port abutting the third plurality of fiber optic adapter ports, the third plurality of fiber optic ports and the fourth fiber optic adapter port extending along a same plane as the second support surface, and
wherein the first module assembly and the second module assembly are vertically aligned with one another.

13. The system of claim 12, wherein the first and third plurality of connectors comprise lucent connectors, and the second and fourth connectors comprise multi-push an connectors.

14. A patch panel assembly comprising:
a plurality of fiber optic equipment trays, each of the plurality of fiber optic equipment trays being movable relative to one another;
a plurality of lucent connector ("LC") adapter ports, each of the plurality of fiber optic equipment hays being coupled with some of the plurality of the LC adapter ports;
a plurality of multi-fiber push-on ("MPO") adapter ports, at least one MPO adapter port of the plurality of MPO adapter ports being coupled to each tray and positioned directly adjacent the some of the plurality of LC ports coupled to each of the plurality of fiber optic equipment trays;
wherein the some of the LC adapter ports and the at least one MPO adapter port on each tray are positioned in a single row across a width of the hay,
and wherein the LC adapter ports are dual polarity ports.

15. The patch panel assembly of claim 14, wherein the plurality of fiber optic equipment trays includes at least two fiber optic equipment trays vertically aligned with one another, and wherein the some of the plurality of LC adapter parts and the at least one MPO adapter port are coupled to a first tray of the at least two fiber optic equipment trays and arranged to vertically align with the some of the LC adapter ports and the at least one MPO adapter port coupled to a second fiber optic equipment tray of the at least two fiber optic equipment trays.
